# EUROPEAN PATENT APPLICATION

(11) **EP 3 606 085 A1**
(43) Date of publication of application: **05.02.2020**
(21) Application number: 18772069.3
(22) Date of filing: 14.03.2018
(51) Int. Cl.: H04N 21/83, H04N 21/238, H04N 21/81, H04N 21/845, H04N 21/262, H04N 21/854

(54) **INFORMATION PROCESSING DEVICE, INFORMATION PROCESSING METHOD, AND PROGRAM**

(30) Priority: 24.03.2017 JP 2017060221
(71) Applicant: Sony Corporation, Tokyo 108-0075 (JP)
(72) Inventor: TAKAHASHI, Ryohei, Tokyo 108-0075 (JP); HAMADA, Toshiya, Tokyo 108-0075 (JP); KATSUMATA, Mitsuru, Tokyo 108-0075 (JP)
(74) Representative: D Young & Co LLP
(86) International application number: PCT/JP2018/009913
(87) International publication number: WO 2018/173875

(57) **Abstract**

The present disclosure relates to an information processing apparatus and an information processing method, and a program that can signal region information of a full sphere picture in a more variety of projection formats.

The region information expresses a region on a spherical surface by signaling a plurality of vertexes on the spherical surface and by connecting the vertexes by shortest distances on the spherical surface. Alternatively, the region information expresses a region on a spherical surface by signaling surface regions in accordance with a number of surfaces, the surface regions being formed by signaling a plurality of vertexes on the spherical surface and by connecting the vertexes by shortest distances on the spherical surface. The present technology is applicable to a distribution system that performs network distribution of the full sphere picture by MPEG-DASH, for example.

## Description

### Technical Field

The present disclosure relates to an information processing apparatus and an information processing method, and a program, more particularly to an information processing apparatus and an information processing method, and a program that can signal region information of a full sphere picture in a more variety of projection formats.

### Background Art

As a standardization flow in the Internet streaming such as IPTV (Internet Protocol Television), a method applied to VOD (Video On Demand) streaming by HTTP (Hypertext Transfer Protocol) streaming or live streaming is standardized.

In particular, MPEG-DASH (Moving Picture Experts Group Dynamic Adaptive Streaming over HTTP) standardized by ISO/IEC/MPEG gathers attention (for example, see Non-Patent Literature 1).

In addition, with respect to MPEG, VR standardization (MPEG-I: Coded Representation of Immersive media) is progressing. For example, in the case of an HMD (Head Mounted Display) typically used for visually and auditorily sensing the full sphere picture, a picture displayed at one time is not over entire 360 degrees, but only a part region thereof. Accordingly, as to the full sphere picture used in the VR, it needs to signal region information that represents the part region displayed. Furthermore, in a case where the full sphere picture is network distributed by the MPEG-DASH, a bandwidth is limited. In order to use the bandwidth efficiently, viewport dependent processing is under consideration.

### Citation List

### Non-Patent Literature

Non-Patent Literature 1: ISO/IEC 23009-1:2012 Information technology Dynamic adaptive streaming over

### HTTP (DASH)

### Disclosure of Invention

### Technical Problem

Incidentally, in OMAF CD (Full sphere Media Application Format Committee Draft) in the related art, an region coverage on a spherical surface is signaled as CoverageInformationBox. However, there are projection formats that cannot be supported by the OMAF CD in the related art, and it is desirable to support more variety of projection formats.

The present disclosure is made in view of the above-mentioned circumstances, and it is an object of the present disclosure is that the region information of the full sphere picture can be signaled in more variety of projection formats.

### Solution to Problem

An information processing apparatus according to a first aspect of the present disclosure includes a generating section that generates region information expressing a region on a spherical surface by signaling a plurality of vertexes on the spherical surface and by connecting the vertexes by shortest distances on the spherical surface.

An information processing method or a program according to the first aspect of the present disclosure includes the step of generating region information expressing a region on a spherical surface by signaling a plurality of vertexes on the spherical surface and by connecting the vertexes by shortest distances on the spherical surface.

In the first aspect of the present disclosure, region information expressing a region on a spherical surface by signaling a plurality of vertexes on the spherical surface and by connecting the vertexes by shortest distances on the spherical surface is generated.

An information processing apparatus according to a second aspect of the present disclosure includes a generating section that generates region information expressing a region on a spherical surface by signaling surface regions in accordance with a number of surfaces, the surface regions being formed by signaling a plurality of vertexes on the spherical surface and by connecting the vertexes by shortest distances on the spherical surface.

An information processing method or program according to the second aspect of the present disclosure includes the step of generating region information expressing a region on a spherical surface by signaling surface regions in accordance with the number of surfaces, the surface regions being formed by signaling a plurality of vertexes on the spherical surface and by connecting the vertexes by shortest distances on the spherical surface.

In the second aspect of the present disclosure, region information expressing a region on a spherical surface by signaling surface regions in accordance with the number of surfaces, the surface regions being formed by signaling a plurality of vertexes on the spherical surface and by connecting the vertexes by shortest distances on the spherical surface is generated.

### Advantageous Effects of Invention

According to the first and second aspects of the present disclosure, region information of a full sphere picture can signal in a more variety of projection formats.

### Brief Description of Drawings

[Fig. 1] Fig. 1 is a diagram of explaining viewport dependent processing.
[Fig. 2] Fig. 2 is a diagram showing a spherical coordinate system that handles viewport information.
[Fig. 3] Fig. 3 shows an example of region information specified by MPEG.
[Fig. 4] Fig. 4 is a diagram showing two types of region expressions on a spherical surface by shape_type.
[Fig. 5] Fig. 5 is a diagram showing storage sites of covi that is content coverage information.
[Fig. 6] Fig. 6 is a diagram of explaining an example that the related art syntax could not accurately expressed.
[Fig. 7] Fig. 7 is a diagram showing an example of projection formats including triangle surfaces.
[Fig. 8] Fig. 8 is a diagram showing a first example of a signal on a spherical surface according to a first embodiment.
[Fig. 9] Fig. 8 is a diagram showing a second example of a signal on a spherical surface according to a first embodiment.
[Fig. 10] Fig. 10 is a diagram of explaining an application example of signaling two surfaces of a cube.
[Fig. 11] Fig. 11 is a diagram showing an example of extended ISOBMFF according to a first embodiment.
[Fig. 12] Fig. 12 is a diagram of explaining an example that coverage is not determined uniquely just with an expression by point_yaw/pitch.
[Fig. 13] Fig. 13 is a diagram showing definitions of parameters according to a first embodiment.
[Fig. 14] Fig. 14 is a diagram showing an example that three surfaces of a cube are signaled.
[Fig. 15] Fig. 15 is a diagram showing a parameter in a case where three surfaces of a cube are signaled.
[Fig. 16] Fig. 16 is a diagram showing an example that two surface of an octahedron are signaled.
[Fig. 17] Fig. 17 is a diagram showing a parameter in a case where two surface of an octahedron are signaled.
[Fig. 18] Fig. 18 is a diagram showing an example of a signal of a region on a spherical surface according to a second embodiment.
[Fig. 19] Fig. 19 is a diagram showing an example of extended ISOBMFF in a second embodiment.
[Fig. 20] Fig. 20 is a diagram of explaining exclude_flag.
[Fig. 21] Fig. 21 is a diagram showing definitions of parameters used in a second embodiment.
[Fig. 22] Fig. 22 is a diagram showing a first example of signaling three surfaces of a cube.
[Fig. 23] Fig. 23 is a diagram showing a second example of signaling three surfaces of a cube.
[Fig. 24] Fig. 24 is a diagram shows an example of signaling two surfaces of octahedron.
[Fig. 25] Fig. 25 is a diagram of explaining an example that signals limited to expression of a triangle region.
[Fig. 26] Fig. 26 is a diagram showing an example of RegionOnSphereStruct in the example of Fig. 25.
[Fig. 27] Fig. 27 is a diagram showing definition of parameters in the example of Fig. 25.
[Fig. 28] Fig. 28 is a diagram showing a first description example of tcov by extended ISOBMFF in a third embodiment.
[Fig. 29] Fig. 29 is a diagram showing definition of parameters in the example of Fig. 28.
[Fig. 30] Fig. 30 is a diagram showing a second description example of tcov by extended ISOBMFF in a third embodiment.
[Fig. 31] Fig. 31 is a diagram showing definition of parameters in the example of Fig. 30.
[Fig. 32] Fig. 32 is a diagram showing a third description example of tcov by extended ISOBMFF in a third embodiment.
[Fig. 33] Fig. 33 is a diagram showing definition of parameters in the example of Fig. 32.
[Fig. 34] Fig. 34 is a diagram showing a fourth description example of tcov by extended ISOBMFF in a third embodiment.
[Fig. 35] Fig. 35 is a diagram showing definition of parameters in the example of Fig. 34.
[Fig. 36] Fig. 36 is a diagram of explaining a case having tcov only in a main fraction track in a third embodiment.
[Fig. 37] Fig.37 is a diagram of explaining a case having tcov in total fraction tracks in a third embodiment.
[Fig. 38] Fig. 38 is a diagram showing an example that six surfaces of a cube are signaled.
[Fig. 39] Fig. 39 is a diagram showing a first example of extended DASH MPD in a fourth embodiment.
[Fig. 40] Fig. 40 is a diagram showing definition of parameters.
[Fig. 41] Fig. 41 is a diagram showing definition of parameters.
[Fig. 42] Fig. 42 is a diagram of explaining a modification when syntax in a first embodiment is used.
[Fig. 43] Fig. 43 is a diagram showing definition of parameters.
[Fig. 44] Fig. 44 is a diagram showing a second example of extended DASH MPD in a fourth embodiment.
[Fig. 45] Fig. 45 is a diagram showing definition of parameters.
[Fig. 46] Fig. 46 is a diagram showing definition of parameters.
[Fig. 47] Fig. 47 is a diagram of explaining a modification when syntax in a second embodiment is used.
[Fig. 48] Fig. 48 is a diagram showing eight surfaces of an octahedron are signaled.
[Fig. 49] Fig. 49 is a diagram showing a description example of MPD to which signal is described in Fig. 48.
[Fig. 50] Fig. 50 is a diagram showing a modification of a fourth embodiment.
[Fig. 51] Fig. 51 is a block diagram showing a configuration example of a distribution system to which the present technology is applied.
[Fig. 52] Fig. 52 is a block diagram showing a configuration example of a generation device.
[Fig. 53] Fig. 53 is a block diagram showing a configuration example of a reproduction device.
[Fig. 54] Fig. 54 is a flowchart of explaining file generating processing.
[Fig. 55] Fig. 55 is a flowchart of explaining file acquiring processing.
[Fig. 56] Fig. 56 is a block diagram showing a configuration example of a computer in an embodiment to which the present technology is applied.

### Modes for Carrying Out the Invention

Hereinafter, specific embodiments to which the present technology is applied will be described with reference to the drawings in detail.

### <Region information of full sphere picture in the related art>

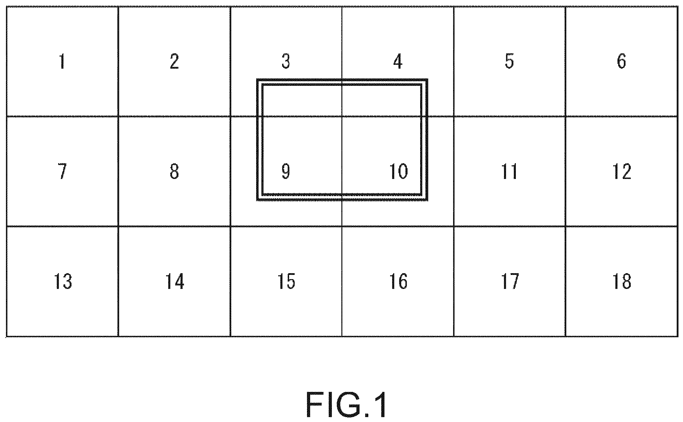

First, with reference to Fig. 1 to Fig. 7, region information of a full sphere picture in the related art will be described.

In the related art, with respect to the full sphere picture partitioned into a plurality of regions, a technology called as viewport dependent processing that acquires and displays a picture of an adequate region in accordance with client's point of view and field of view is used. In addition, the viewport dependent processing does not need to acquire a region being not displayed.

For example, Fig. 1 shows a state that the full sphere picture is developed in a flat manner by the equirectangular projection. The entire is partitioned into 18 regions and each region is taken as individual video stream. Furthermore, the regions according to the client's point of view and field of view are shown by a double-line rectangle, and a video stream is acquired in accordance with the regions. In the example of Fig. 1, the video streams of Nos. 3, 4, 9, and 10 regions are acquired and used for displaying the regions according to the client's point of view and field of view.

In addition, in order to perform the viewport dependent processing, it needs to signal position information and size information of each region of the full sphere picture. Then, the client can acquire and display video regions according to a viewport on the basis of the information. Note that each pieces of the region information of the full sphere picture is signaled as region information on a spherical surface (spherical coordinate system).

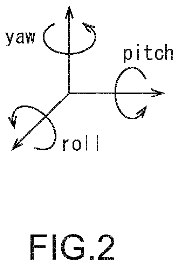

For example, it is assumed that the client is the HMD. Inside the HMD, viewport information is typically handled by a spherical coordinate system (yaw, pitch, roll) shown in Fig. 2, and it will be possible to simplify the processing by arranging the coordinate system.

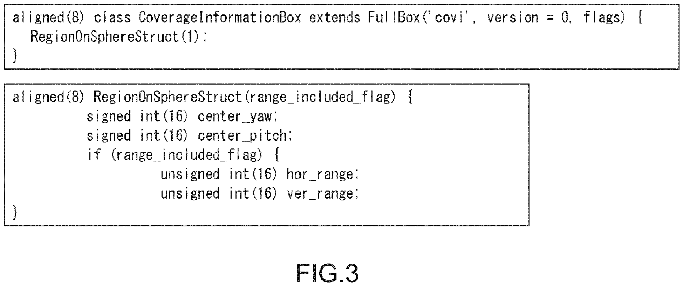

Fig. 3 shows an example of the region information specified by the MPEG.

In such region information, CoverageInformationBox signals, for example, the information of the region on the spherical surface on which the full sphere picture stored in a track is displayed. Then, a yaw angle at center of the region is shown by center_yaw, a pitch angle at center of the region is shown by center_pitch, an angle range in the horizontal direction is shown by hor_range, and an angle range in the vertical direction is shown by ver_range.

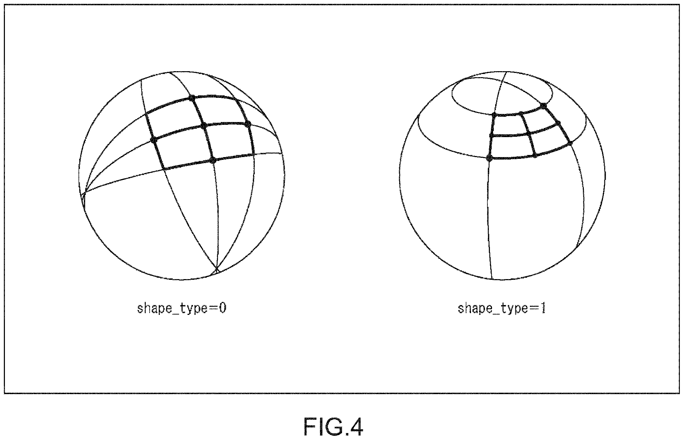

Furthermore, as shown in Fig. 4, two types of region expressions on the spherical surface can be performed by shape_type.

For example, shape_type=0 shown at a left side of Fig. 4 performs the region expressions on the spherical surface by a region shape encircled with four great circles. In addition, shape_type=1 shown at a right side of Fig. 4 performs the region expressions on the spherical surface by a region shape encircled with two small two grate circles. Here, the great circle represents a circle having a section including a center matched with a center of sphere, and the small circle represents a circle other than that. Note that as a coverage expression at the present time, only the shape_type=1 is operated.

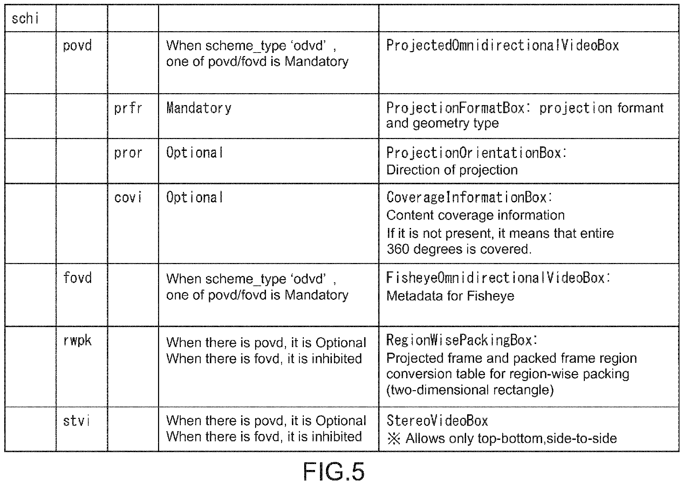

Fig. 5 shows storage sites of covi that is content coverage information.

Incidentally, shape_type=0 can signal a surface region of cube projection mapping (CMP) for one by one and can signal a rectangular region of equirectangular projection (ERP). However, it could not supported two or more surface regions of the cube projection mapping and the projection format other than those in the related art.

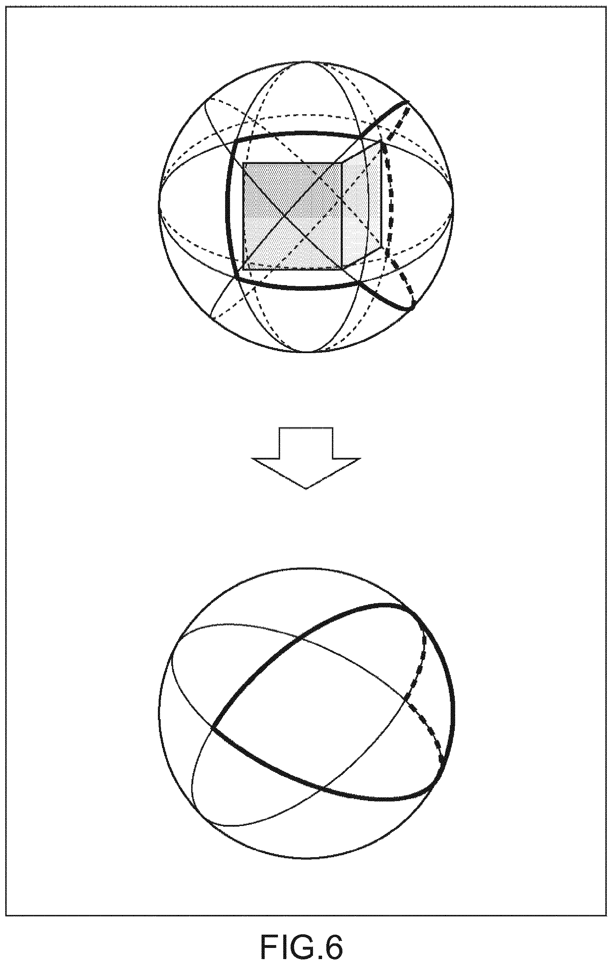

For example, in a case where coverage of two surface of a cube hatched in gray color is expressed as shown at an upper side of Fig. 6, the current syntax could not accurately expressed. For example, if it signals (center_yaw, center_pitch, hor_range, ver_range) = (45, 0, 180, 90), it results in a hemisphere region surrounded by a bold line at a lower side of Fig. 6. Therefore, the region on the spherical surface that can be covered by the two surface of the cube becomes narrow. Specifically, while 1/3 of the spherical surface surrounded by the bold line is covered at the upper side of Fig. 6, only 1/4 of the spherical surface surrounded by the bold line is covered at the lower side of Fig. 6.

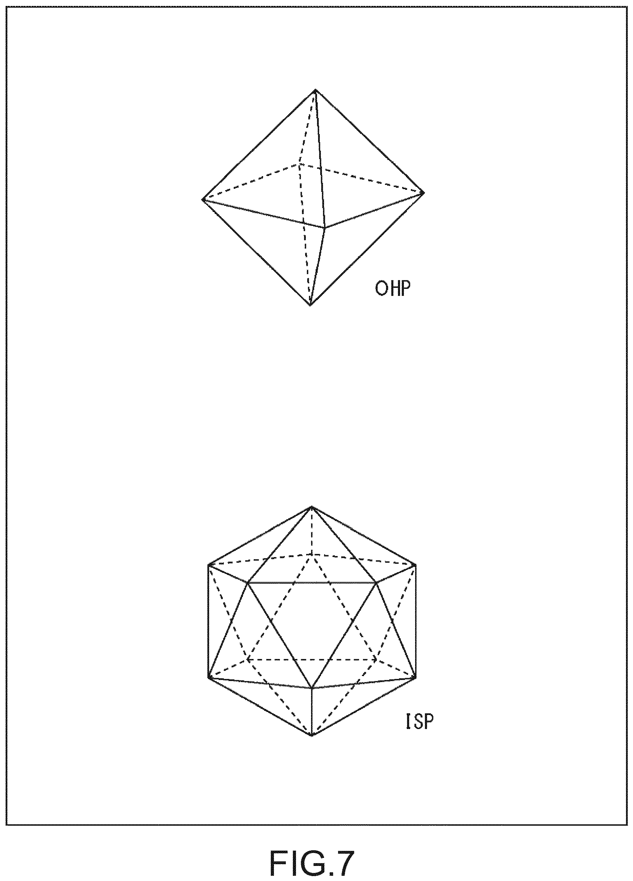

Furthermore, the related art did not support the region expression of projection formats including triangle surfaces (OHP: octahedron projection, ISP: icosahedron projection) as shown in Fig. 7.

Accordingly, it is desirable to support the region expression of the projection format (OHP or ISP) that is not supported in the related art and that is generally used for two or more surface regions of the CMP other than the ERP or the CMP and may be used for the OMAF in the future. Furthermore, it is desirable to support not only the OHP and the ISP, but also every projection format using a polyhedron.

### <Signaling method of region of ISOBMFF track>

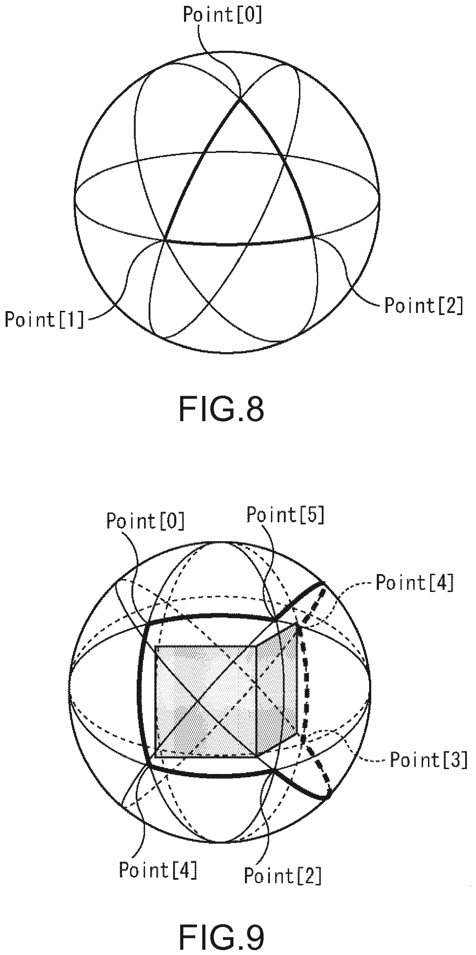

With reference to Fig. 8 to Fig. 17, a first example of a signaling method of a track region in an ISOBMFF according to a first embodiment of the present technology will be described.

In the first embodiment, content coverage stored in an ISOBMFF track is expressed by a region formed by signaling a plurality of vertexes by yaw and pitch and connecting the vertexes by shortest distances on a spherical surface.

For example, Fig. 8 shows the first example that three vertexes are signaled and connected by the shortest distances on the spherical surface to perform the region expression on the spherical surface. Similarly, Fig. 9 shows a second example that six vertexes are signaled and connected by the shortest distances on the spherical surface to perform the region expression on the spherical surface.

At this time, line segments connecting respective vertexes on the spherical surface become a part of the great circle. In addition, with such a signal, the projection formats supporting not only the OHP and the ISP shown in Fig. 7 but also other polyhedrons are available.

In addition, since the two surfaces of the cube can be signaled as shown in Fig. 9, streaming can be efficiently performed even if the region according to the client's point of view and field of view lies across the two surfaces of the cube, for example.

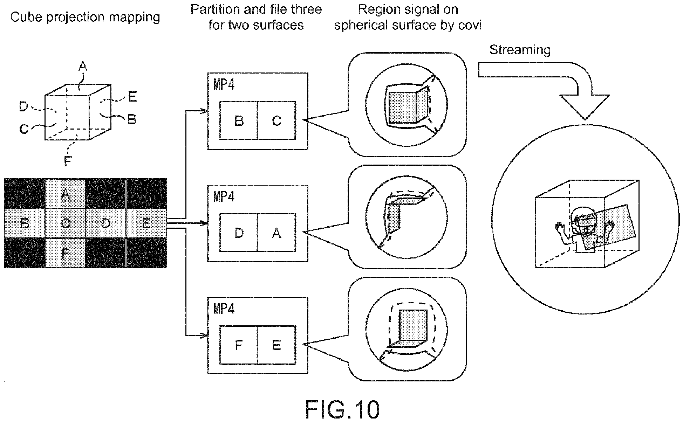

Here, with reference to Fig. 10, an application example of signaling the two surfaces of the cube will be described.

For example, in the cube projection mapping, the cube has six surfaces of a surface A, a surface B, a surface C, a surface D, a surface E, and a surface F.

Then, these six surfaces are partitioned and filed into three for each two surfaces. Specifically, filing is performed as follows: a file including two surfaces of the surface B and the surface C, a file including two surfaces of the surface A and the surface C, and a file including two surfaces of the surface E and the surface F. At this time, in each file, the respective two surfaces are signaled on the region of the spherical surface by covi, as shown in Fig. 9 described above.

Here, in a case where the region according to the client's point of view and field of view lies across the surface B and the surface C, for example, i.e., a user tries to look the region hatched in a gray color in Fig. 10, the file including the two surfaces, i.e., the surface B and the surface C, is acquired on the basis of covi information.

In other words, since the two or more surface regions of the cube projection mapping cannot be signaled in the related art, streaming cannot be efficiently performed if the region according to the client's point of view and field of view lies across the surface B and the surface C. In contrast, the plurality of surface can be signaled. Even if the region according to the client's point of view and field of view lies across the plurality of surfaces, the file including these surfaces are streamed and streaming can be efficiently performed.

Incidentally, in a case where the region expression is performed by signaling the plurality of vertexes by yaw and pitch and connecting the vertexes by the shortest distances on the spherical surface, ISOBMFF is needed to be extended in the related art.

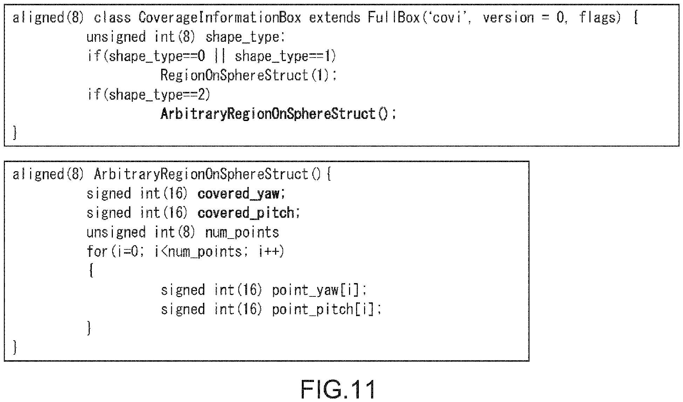

Fig. 11 shows an example of extended ISOBMFF (CoverageInformationBox) and ArbitraryRegionOnSphereStruct.

In the ISOBMFF shown in Fig. 11, shape_type=2 is introduced. For example, shape_type=2 is defined such that the respective vertexes are connected by the shortest distance on the spherical surface by rules, between i=0 and i=1, i=1 and i=2, ···, i=n-1 and i=n, i=n and i=0.

In addition, in the ISOBMFF shown in Fig. 11, covered_yaw and covered_pitch are defined to show yaw and pitch of a representative point included in the coverage (e.g., center point of region). Specifically, covered_yaw/pitch has to signal points inside the region expressed by point_yaw/pitch. For example, in a case where three surface of the cube are coveraged, the coverage is not determined uniquely just with the expression by point_yaw/pitch. Therefore, signaling by covered_yaw/pitch becomes necessary.

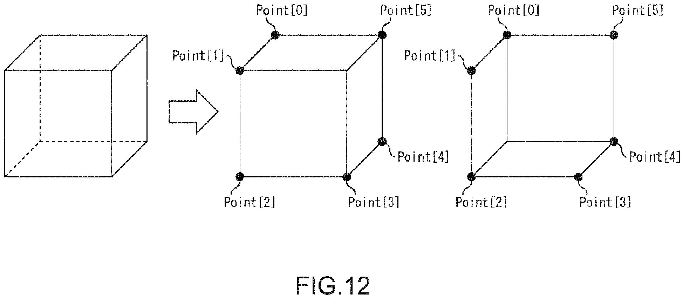

With reference to Fig. 12, an example that the coverage is not determined uniquely just with the expression by point_yaw/pitch will be described.

As shown in Fig. 12, in a case where the cube is partitioned for every three surfaces, it partitions into three surfaces at a front side and three surfaces at a back side. In this case, when respective shape coverages are signaled, signaled points will be the same. Accordingly, in order to distinguish these two shapes, it needs to signal the direction (three surfaces at front side or three surfaces at back side) by covered_yaw/pitch.

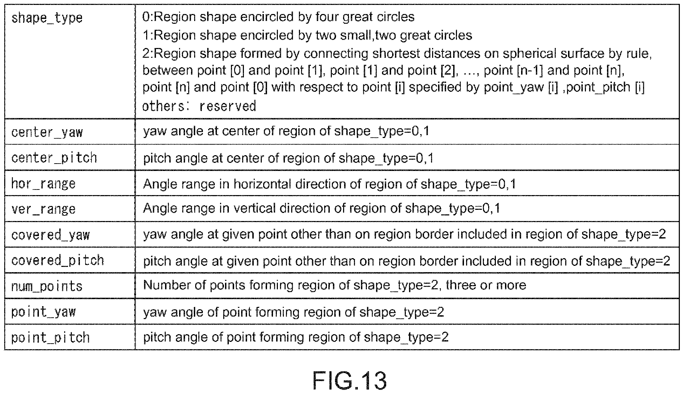

Fig. 13 shows definitions of parameters used in a region signaling method in such an extended ISOBMFF track.

Next, actual signaling examples according to the first embodiment will be described.

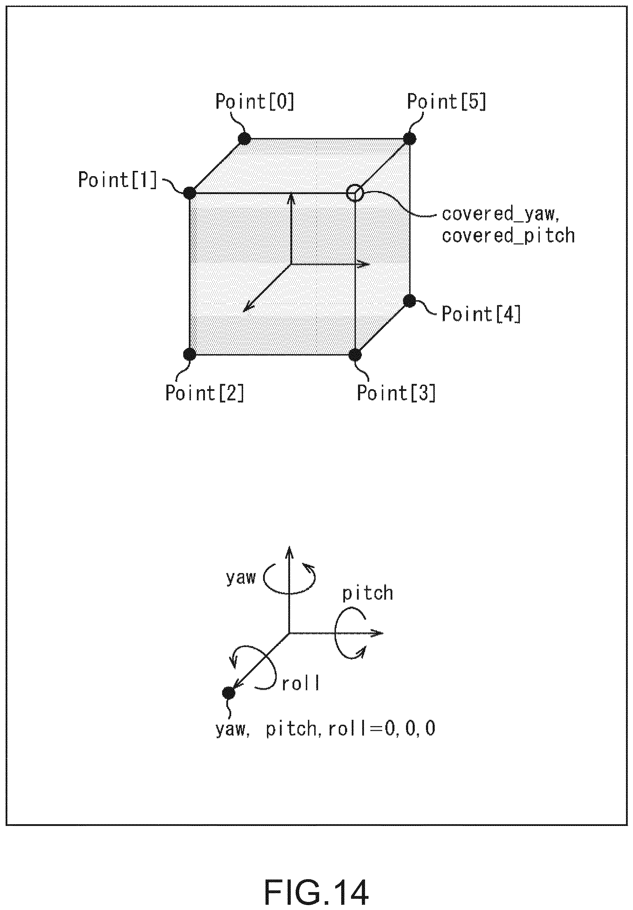

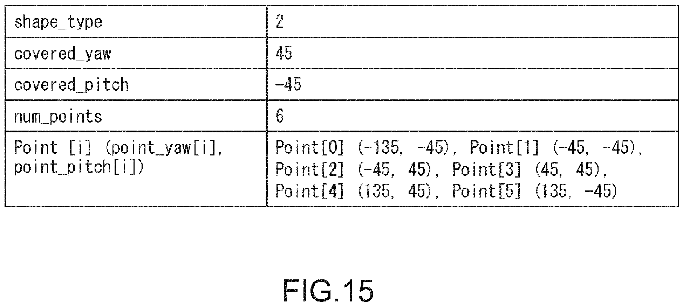

For example, in a case where the three surfaces at the front side of the cube shown at an upper side of Fig. 14 are signaled in accordance with a coordinate system shown at a lower side of Fig. 14, the parameters are set as shown in Fig. 15. In addition, in the coordinate system, the yaw angle is set to -180 degrees or more and less than 180 degrees, the pitch angle is set to -90 degrees or more and 90 degrees or less, and a roll angle is set to -180 degrees or more and 180 degrees or less.

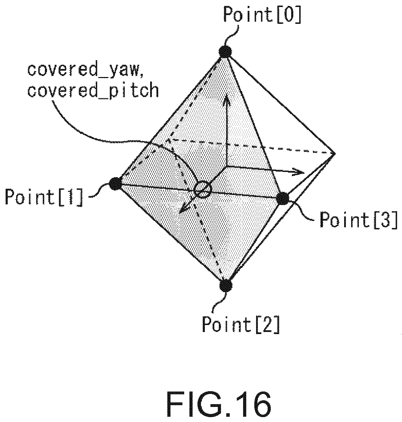

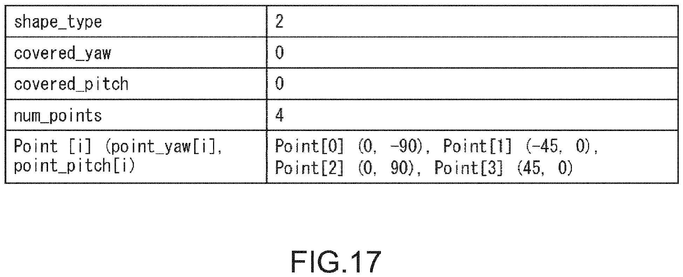

Similarly, in a case where two surface at a front side of an octahedron shown in Fig. 16 are signaled, the parameters are set as shown in Fig. 17.

Thus, according to the first embodiment, by signaling the points on the spherical surface by yaw and pitch using extended ISOBMFF, there is an advantage that it is easy to handle on implementation. For example, as the client itself has own viewport information as to the direction and the field of view (FoV), it is easy to decide whether or not the region encircled by the signaled points is included in a viewport range. Incidentally, in the first embodiment, discontinuous region signaling is not supported.

Note that, as a modification of the first embodiment, flags may be used instead of shape_type, for example. In addition, inclusion of ArbitraryRegionOnSphereStruct may be signaled in RegionOnSphereStruct, which may be switched with shape_type.

### <Signaling method of region of ISOBMFF track>

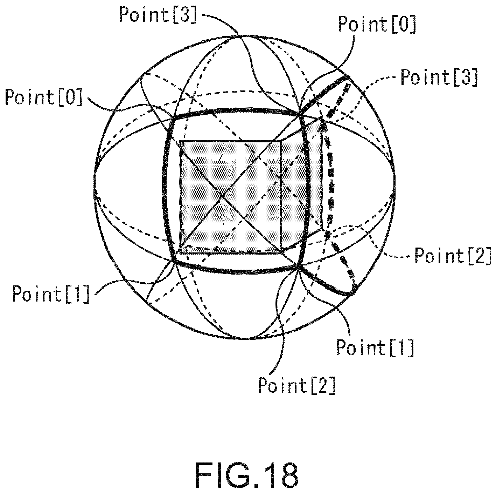

With reference to Fig. 18 to Fig. 27, a second example of a signaling method of a track region in the ISOBMFF according to a second embodiment of the present technology will be described.

In the second embodiment, content coverage stored in the ISOBMFF track is expressed by surface regions formed by signaling the vertexes for each surface by yaw and pitch and connecting the vertexes by shortest distances on the spherical surface, i.e., signaling in plural times for the number of surfaces.

For example, Fig. 18 shows the example that the vertexes are signaled for the two surfaces and the two surfaces that become the surface regions formed by connecting the vertexes on the spherical surface by the shortest distances are signaled to perform the region expression.

At this time, line segments connecting respective vertexes on the spherical surface become a part of the great circle. In addition, with such a signal, the projection formats supporting not only the OHP and the ISP shown in Fig. 7 but also other polyhedrons are available.

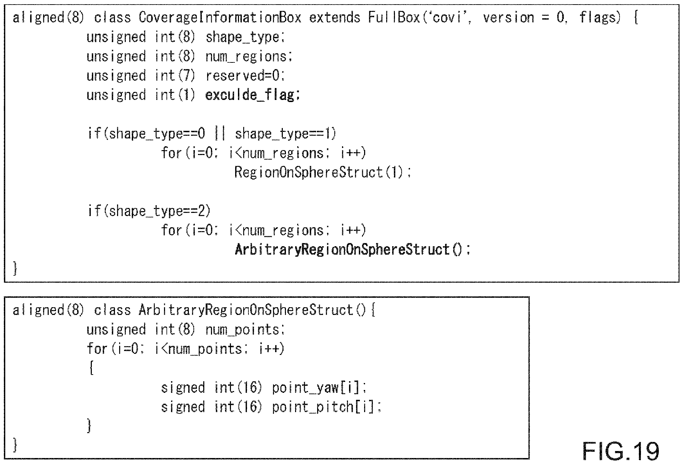

Fig. 19 shows an example of extended ISOBMFF (CoverageInformationBox) and ArbitraryRegionOnSphereStruct.

In the ISOBMFF shown in Fig. 11, shape_type=2 is introduced. For example, shape_type=2 is defined such that the respective vertexes are connected by the shortest distance on the spherical surface by rules, between i=0 and i=1, i=1 and i=2, ···, i=n-1 and i=n, i=n and i=0. Then, as shown in the ISOBMFF, by looping "for loop" for the number of surfaces, the regions including plural surfaces can be signaled.

In addition, in the ISOBMFF shown in Fig. 11, exclude_flag is introduced. If the exclude_flag is 1, the region other than the signaled region becomes the coverage.

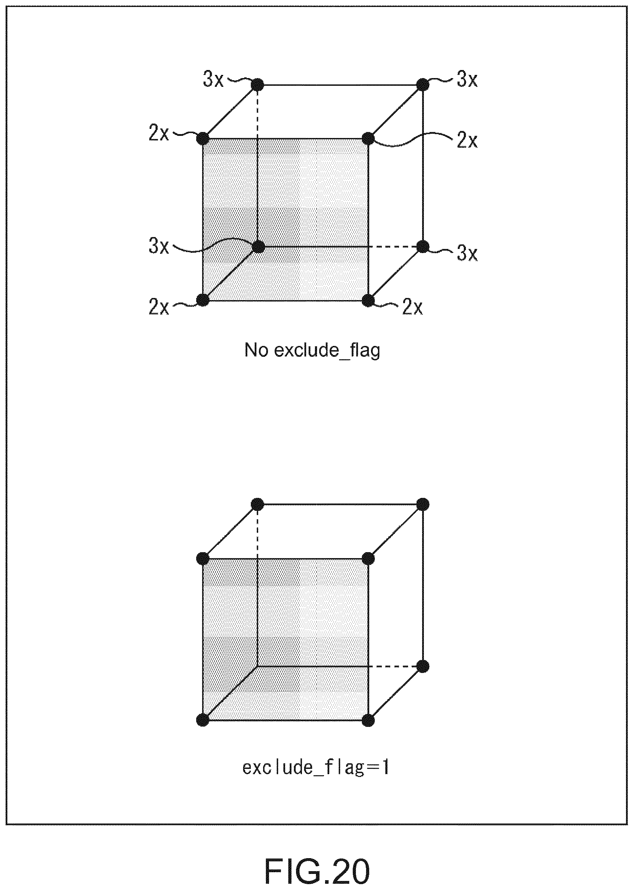

With reference to Fig. 20, the exclude_flag will be described. Fig. 20 shows an example of a coverage signal for five surfaces (other than surface hatched in gray color).

For example, as shown at an upper side of Fig. 20, in the case of exclude_flag=0, it needs 20 point signals according to the five surfaces as the coverage. In contrast, as shown at a lower side of Fig. 20, in the case of exclude_flag=1, it may be four point signals according to the one surface excluding from the coverage. Thus, by using the exclude_flag, bit numbers necessary for the coverage signal can be optimized, i.e., coverage can be performed with fewer bit numbers.

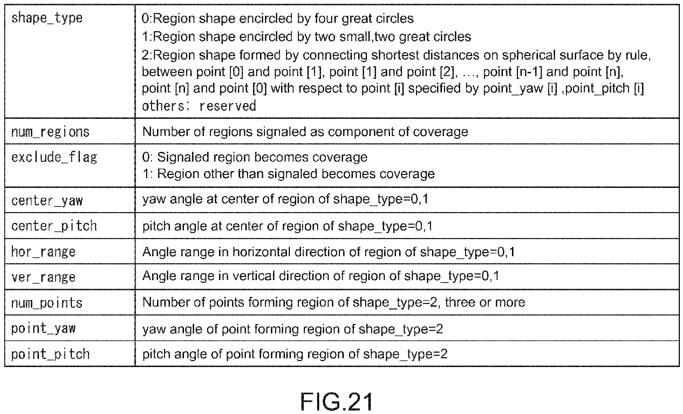

Fig. 21 shows definitions of parameters used in a region signaling method in such an extended ISOBMFF track.

Next, actual signaling examples according to the second embodiment will be described.

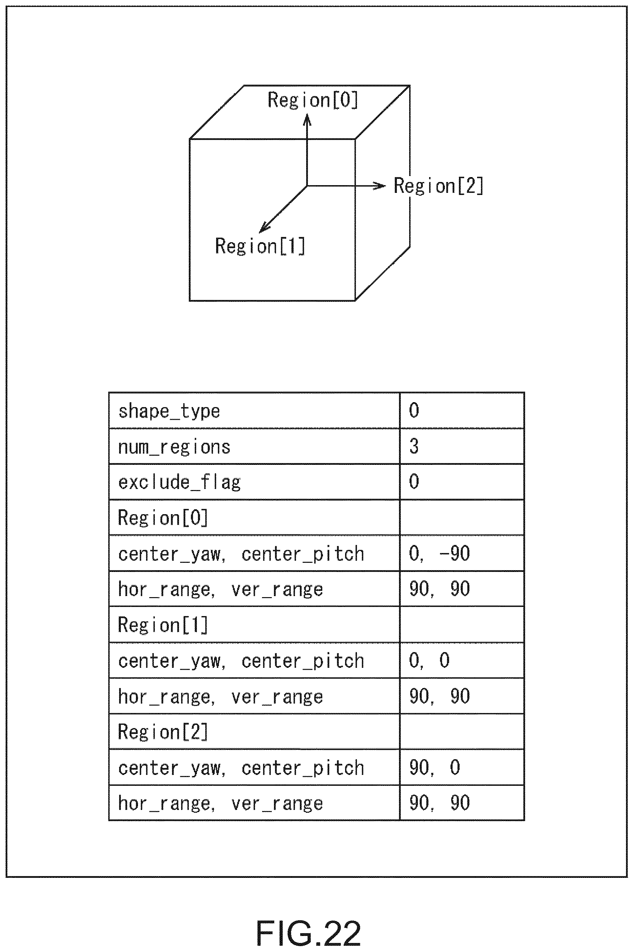

For example, Fig. 22 shows an example of signaling the three surfaces of the cube in the case of shape_type=0, i.e., in a manner shown at the left side of Fig. 4 as described above. In this case, the parameters are set as shown at a lower side of Fig. 22.

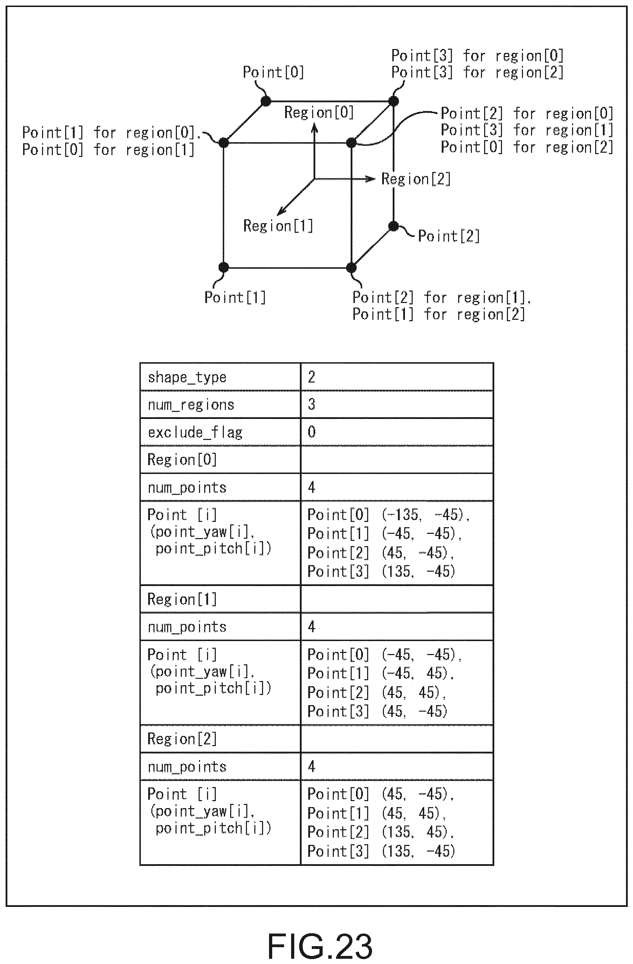

Fig. 22 shows an example of signaling the three surfaces of the cube in the case of shape_type=2, i.e., in a manner described in the second embodiment. In this case, the parameters are set as shown at a lower side of Fig. 23.

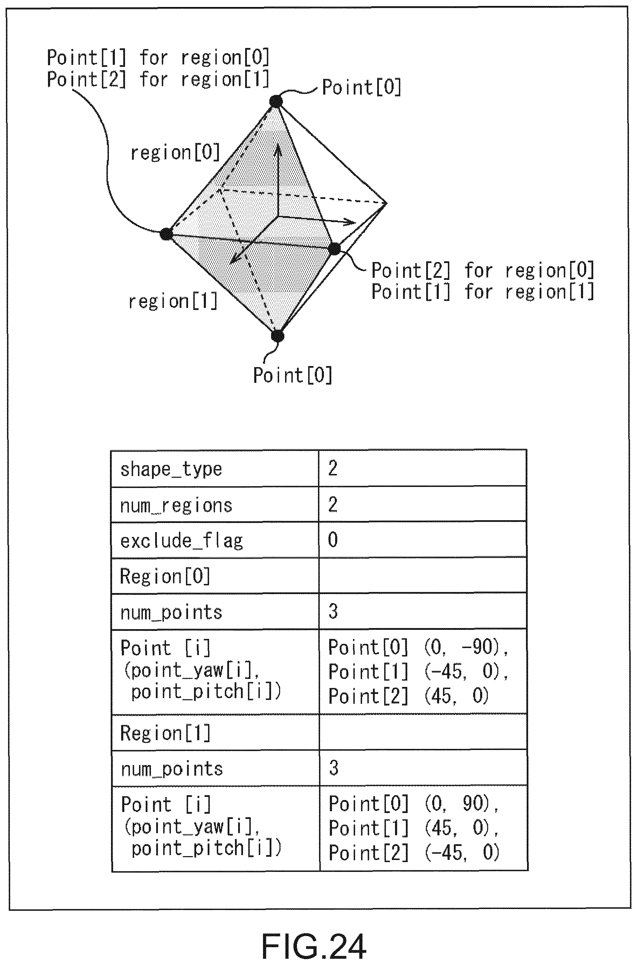

Fig. 24 shows an example of signaling the two surfaces of the octahedron in the case of shape_type=2, i.e., in a manner described in the second embodiment. In this case, the parameters are set as shown at a lower side of Fig. 24.

Thus, according to the second embodiment, by signaling the points on the spherical surface by yaw and pitch using extended ISOBMFF, there is an advantage that it is easy to handle on implementation. For example, as the client itself has own viewport information as to the direction and the field of view (FoV), it is easy to decide whether or not the region encircled by the signaled points is included in the viewport range.

Furthermore, in the second embodiment, as the regions can be signaled in plural times for a surface unit, discontinuous region signaling is possible. In addition, as described above, by using the exclude_flag, the number of vertexes to be signaled can be optimized. Incidentally, vertex information may be duplicated in the second embodiment as compared with the first embodiment described above, and a size of Box may be increased.

Note that, as a modification of the second embodiment, flags may be used instead of shape_type. For example, inclusion of ArbitraryRegionOnSphereStruct may be signaled in RegionOnSphereStruct, which may be switched with shape_type. In addition, shape_type may be changed for each region.

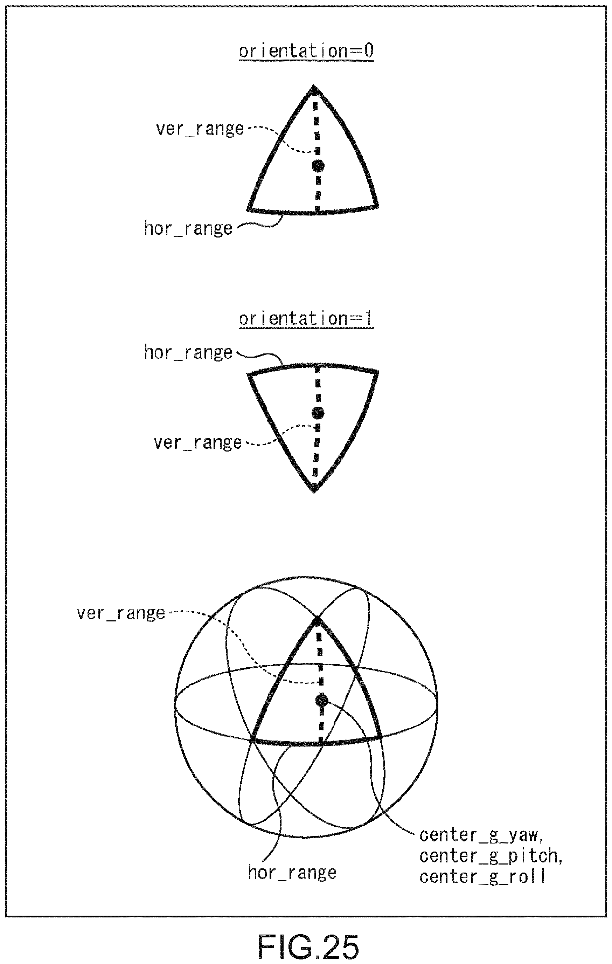

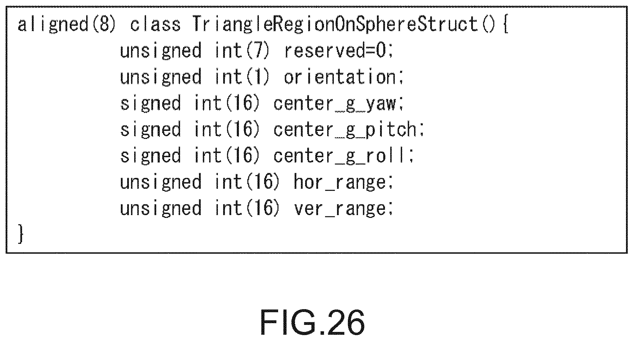

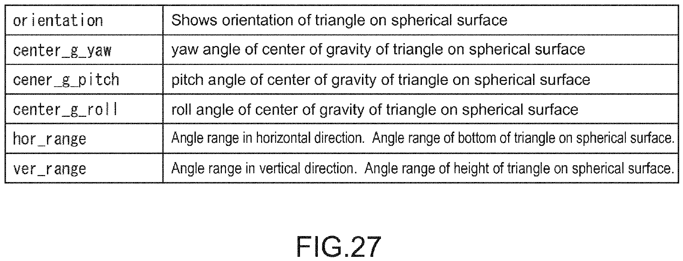

Furthermore, by limiting num_points to 3, shape_type=2 may be used only to express the triangle region. For example, in a case where the second embodiment is limited to expression of the triangle region, the triangle region on the spherical surface can be expressed as shown in Fig. 25. At this time, classTriangleRegionOnSphereStruct is as shown in Fig. 26, and the parameters are defined as shown in Fig. 27.

### <Region signaling method in ISOBMFF for file unit>

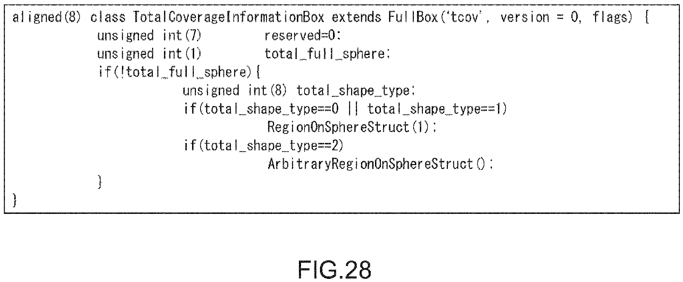

With reference to Fig. 28 to Fig. 38, as a third embodiment of the present technology, a region signaling method in ISOBMFF for a file unit will be described.

In the third embodiment, content total coverage stored by an ISOBMFF file is expressed by using the signaling method in the above-described first and second embodiments. In other words, signaling of the region uses syntax and semantics similar to the above-described first and second embodiments.

For example, the related art specifies only the coverage information for a track unit. In a case where the ISOBMFF file includes plural tracks, coverage that bundles all tracks (= total coverage for file unit) could not signaled.

In contrast, according to the third embodiment, it becomes possible to perform the viewport dependent processing for a file unit on the ISOBMFF including the plural tracks.

In addition, according to the third embodiment, by signaling total coverage information for a file unit, the client can acquire easily displayable regions at the time of file reproduction. For example, in a case where a total full sphere is not covered, a part on which video is not displayed can be buried with client's own video or data designated by ISOBMFF in advance.

For example, according to the third embodiment, tcov (Total Coverage Information Box) is arranged under povd (ProjectedFull sphere VideoBox).

Here, in the following description, a case having tcov only in a main fraction track is taken as a case 1. Further, in the case 1, a case that tcov has only total coverage information is taken as a case 1-1, and a case that tcov has the coverage information about total fraction tracks (including main) in addition to the total coverage information is taken as a case 1-2.

In addition, a case having tcov in total fraction tracks is taken as a case 2. Further, in the case 2, a case that tcov has only the total coverage information is taken as a case 2-1, and a case that tcov has the coverage information about the total fraction tracks (including main) in addition to the total coverage information is taken as a case 2-2.

Thus, on the basis of the respective cases, there are four types of variations of syntax of tcov.

For example, in the first variation of the syntax of tcov, information signaled by tcov has only the total coverage information, and the region signaling method is the same method as the above-described first embodiment.

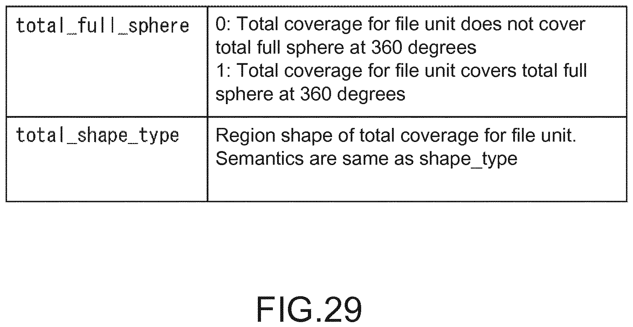

Accordingly, in the first variation of the syntax of tcov, as shown in Fig. 28, ISOBMFF (CoverageInformationBox) is described, and ArbitraryRegionOnSphereStruct is taken as the same as Fig. 11 (first embodiment) as described above. In addition, the parameters are defined as shown in Fig. 29. Note that it can include the modification of the above-described first embodiment.

In addition, in the second variation of the syntax of tcov, information signaled by tcov has only the total coverage information, and the region signaling method is the same method as the above-described second embodiment.

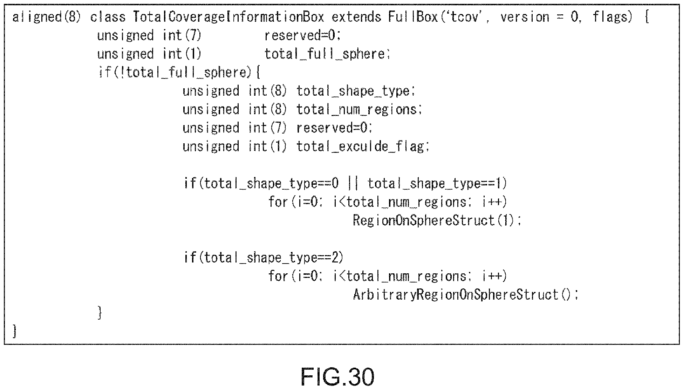

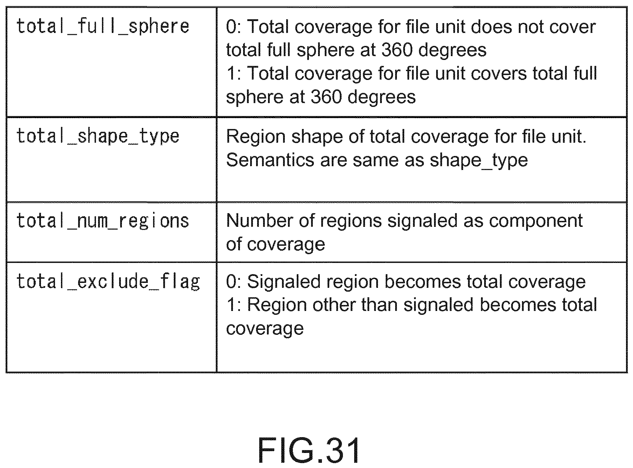

Accordingly, in the second variation of the syntax of tcov, as shown in Fig. 30, ISOBMFF (CoverageInformationBox) is described, and ArbitraryRegionOnSphereStruct is taken as the same as Fig. 19 (second embodiment) as described above. In addition, the parameters are defined as shown in Fig. 31. Note that it can include the modification of the above-described second embodiment.

In addition, in the third variation of the syntax of tcov, information signaled by tcov has the coverage information about the total fraction tracks (including main) in addition to the total coverage information, and the region signaling method is the same method as the above-described first embodiment.

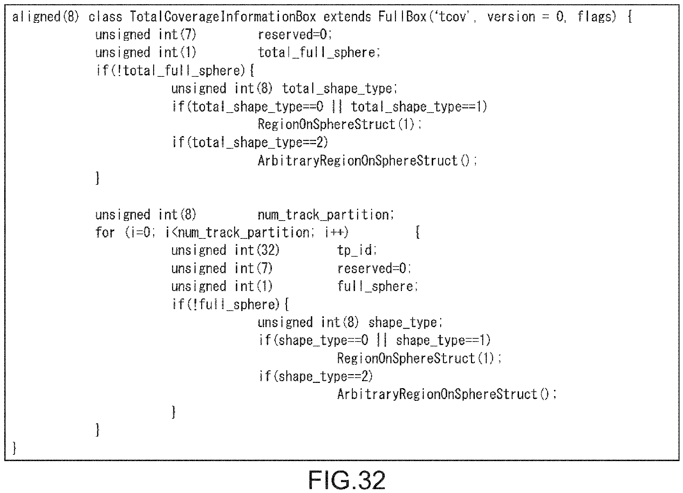

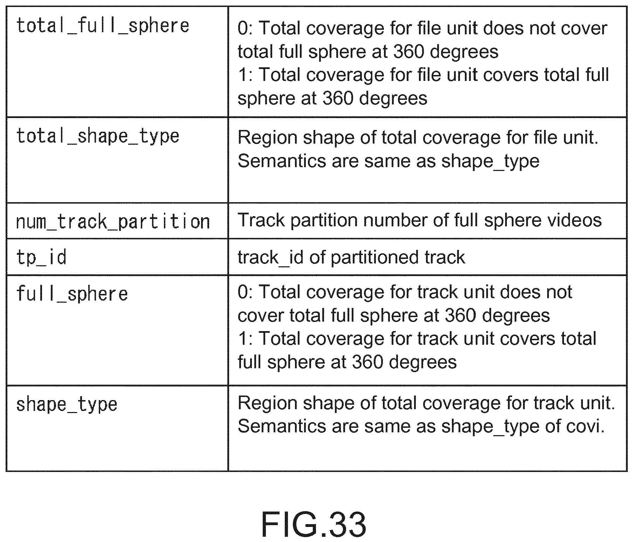

Accordingly, in the third variation of the syntax of tcov, as shown in Fig. 32, ISOBMFF (CoverageInformationBox) is described, and ArbitraryRegionOnSphereStruct is taken as the same as Fig. 11 (first embodiment) as described above. In addition, the parameters are defined as shown in Fig. 33. Note that it can include the modification of the above-described first embodiment.

Note that as a modification of the third variation of the syntax of tcov, num_track_partition sets the number excluding own track having TotalCoverageInformationBox and may not signal track_id of own track by tp_id.

In addition, in the fourth variation of the syntax of tcov, information signaled by tcov has the coverage information about the total fraction tracks (including main) in addition to the total coverage information, and the region signaling method is the same method as the above-described second embodiment.

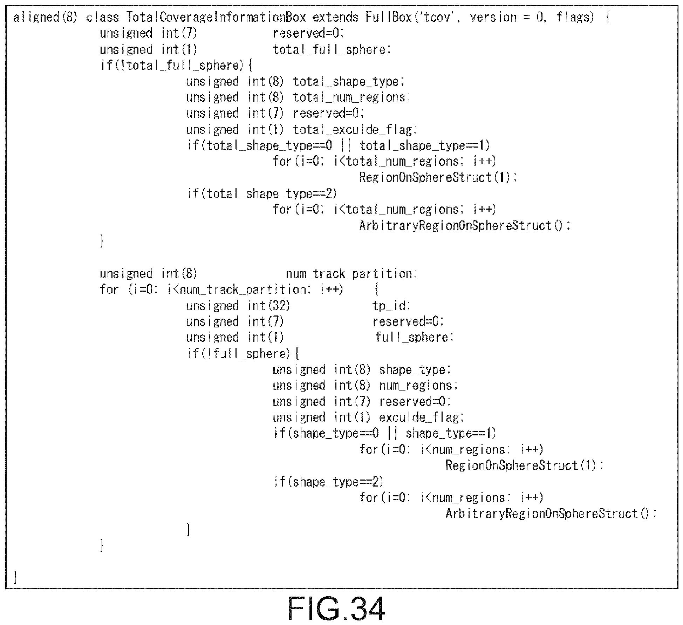

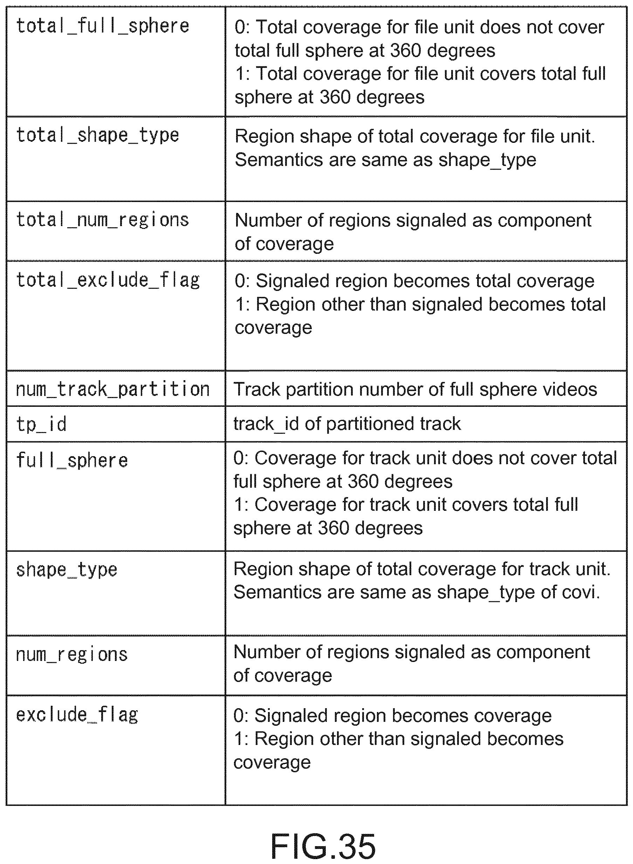

Accordingly, in the fourth variation of the syntax of tcov, as shown in Fig. 34, ISOBMFF (CoverageInformationBox) is described, and ArbitraryRegionOnSphereStruct is taken as the same as Fig. 19 (second embodiment) as described above. In addition, the parameters are defined as shown in Fig. 35. Note that it can include the modification of the above-described second embodiment.

Note that as a modification of the fourth variation of the syntax of tcov, num_track_partition sets the number excluding own track having TotalCoverageInformationBox and may not signal track_id of own track by tp_id.

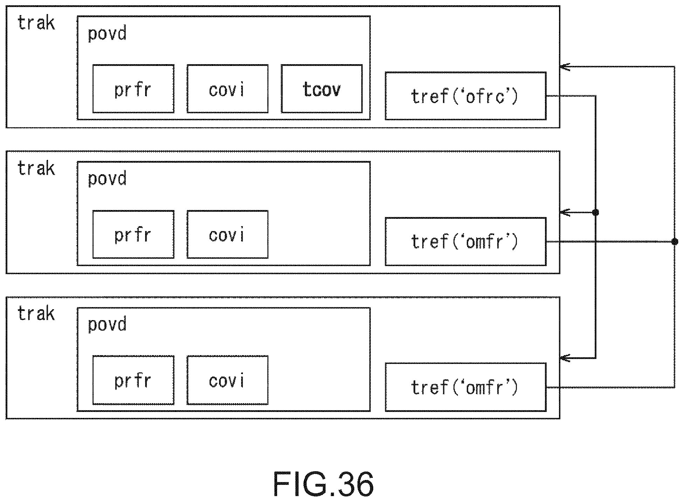

With reference to Fig. 36, according to the third embodiment, the case 1 having tcov only in the main fraction track will be described.

For example, in the case 1, the main fraction track is defined to have tcov, and the fraction track is defined to have no tcov. Further, the main fraction track can refer the fraction track by Track Reference ('ofrc'), and the fraction track can refer the main fraction track by Track Reference ('omfr'). In addition, it has TotalCoverageInformationBox only in the main fraction track.

Here, for example, in the case of the case 1-1 that tcov has only the total coverage information, it becomes possible to perform simple expression that there is no duplicated information about the coverage. Note that in order to acquire the total coverage, it needs to refer the main fraction track. The coverage of other fraction track can be acquired by referring to each fraction track.

In addition, for example, in the case of the case 1-2 that tcov has the coverage information about total fraction tracks (including main) in addition to the total coverage information, the coverage of the fraction track can be acquired in the main fraction track. Note that in order to acquire the total coverage, it needs to refer the main fraction track. Note that as a modification of the case 1, only the main fraction track may have prfr. In addition, in the case of the case 1-2, tref ('ofrc') may not be present.

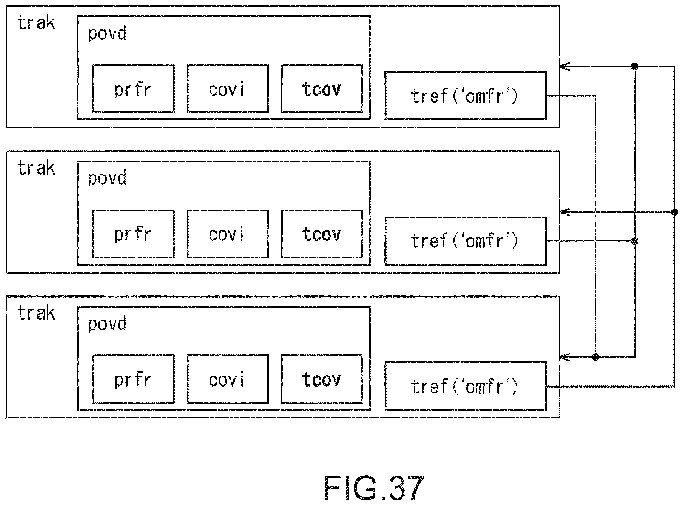

With reference to Fig. 37, according to the third embodiment, the case 2 having tcov in total fraction tracks will be described.

For example, in the case 2, the main fraction track is not distinguished from the fraction track. In addition, each fraction track can refer each other by track reference 'omfr'.

Here, for example, in the case of the case 2-1 that tcov has only the total coverage information, since any fraction track has total coverage, it is easy to acquire the total coverage information. Note that as it has the duplicated information, a file size becomes greater than that of the case 1-1. The coverage of other fraction tracks can be acquired by referring each fraction track.

In addition, for example, in the case of the case 2-2 that tcov has the coverage information about the total fraction tracks (including main) in addition to the total coverage information, the total coverage and the coverage of each fraction track can be acquired in one fraction track. Note that as it has the duplicated information, a file size becomes greater than any one of those of the case 1-1, the case 1-2, and the case 2-2. Note that the case 2-2 may not have tref ('omfr').

Next, actual signaling examples according to the third embodiment will be described.

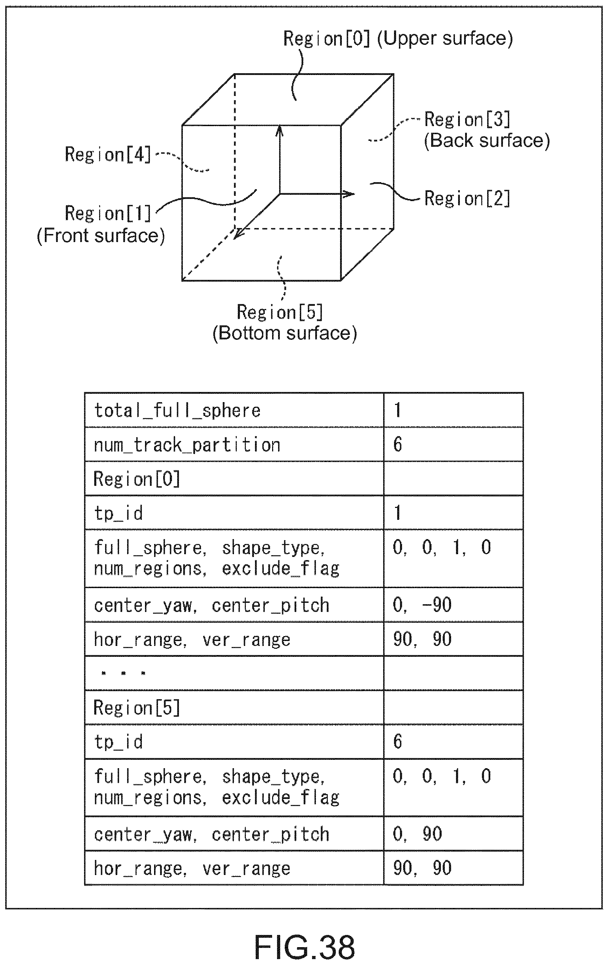

In Fig. 38, as the case 2-2, the fourth variation of the syntac of tcov is used, and each surface is stored in the track one by one as the region. For example, Region[0] is taken as track_id:1, Region[1] is taken as track_id:2, and so on, Region[5] is taken as track_id:6. In addition, the signal of tcov is described as shown at a lower side of Fig. 38.

Note that as a modification of the third embodiment, flags may be used instead of total_full_sphere.

### <Region signaling method in DASH MPD>

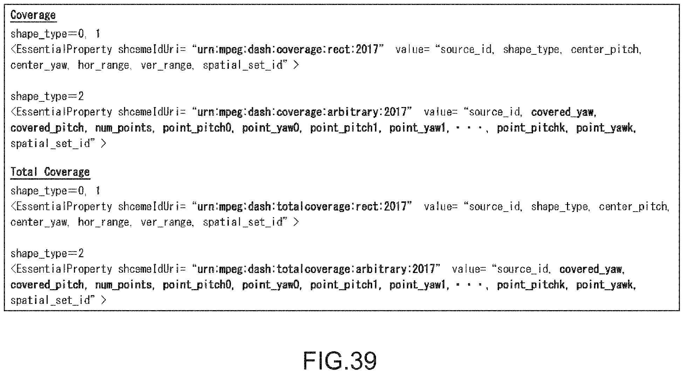

With reference to Fig. 39 to Fig. 50, as a fourth embodiment of the present technology, a region signaling method in DASH MPD will be described.

For example, in DASH MPD, a region covered by each Representation can be signaled.

As a signaling method, EssentialProperty or SupplementalProperty can be used. EssentialProperty is stored under AdaptationSet, and SupplementalProperty is stored under Representation.

For example, as to SupplementalProperty, Player that does not understand Property ignores Property value and may use AdaptationSet (or Representation, Sub-Representation). In addition, as to EssentialProperty, Player that does not understand Property has to ignore AdaptationSet (or Representation, Sub-Representation) to which Property is written.

Fig. 39 shows a first example of extended DASH MPD. Here, the syntax of the above-described first embodiment is used.

In such syntax, if it is coverage:arbitrary, totalcoverage:arbitrary, 0 to 2 become mandatory, and 3 or later depend on num_points. In addition, if the coverage is not signaled, the coverage shows all 360 degrees. On the other hand, if spatial_set_id of the coverage is signaled and the total coverage is not all 360 degrees, the total coverage having the same spatial_set_id becomes necessary. In addition, Coverage and TotalCoverage may be bundled to one EssentialProperty or SupplementalProperty.

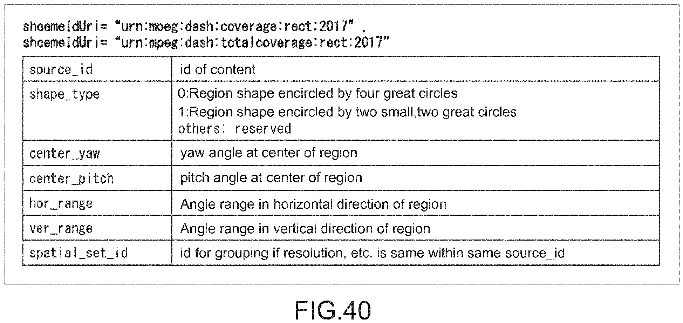

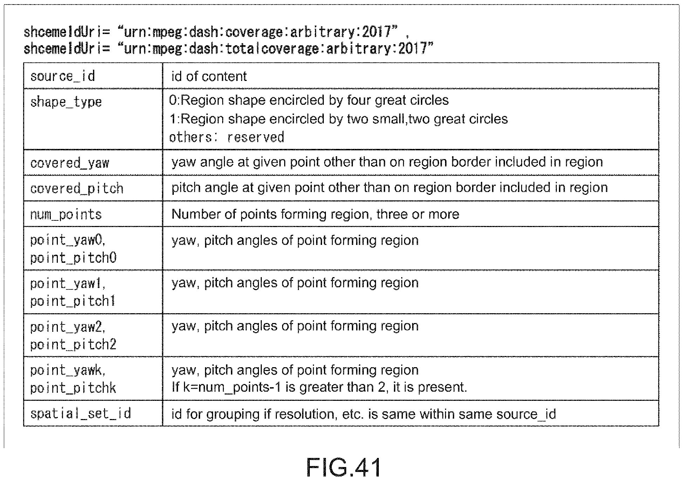

Fig. 40 and Fig. 41 show definitions of parameters used in extended DASH MPD as shown in Fig. 39.

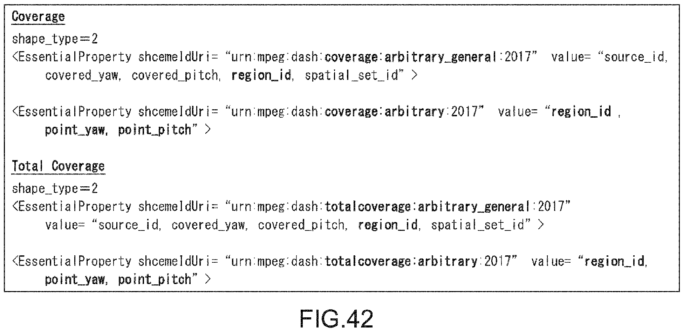

Note that, as a modification when the syntax in the above-described first embodiment is used, in the case of shape_type=2 of Coverage and TotalCoverage, EssentialProperty (coverage:arbitrary, totalcoverage:arbitrary) shown in Fig. 42 is signaled for the numbers of points. At this time, the order of connecting the points may be the order described in EssentialProperty or SupplementalProperty, or may have parameters to show the order in EssentialProperty or SupplementalProperty.

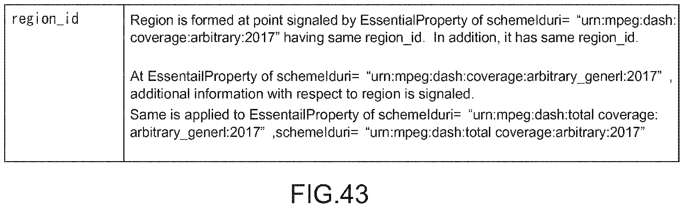

In addition, Fig. 43 shows definitions of parameters used in the syntax shown in Fig. 42.

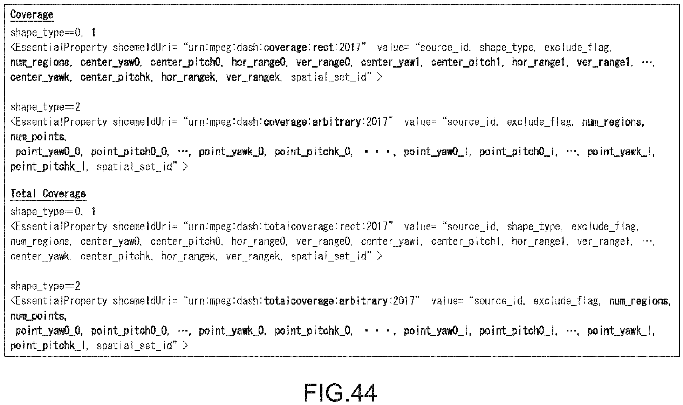

Fig. 44 shows a second example of extended DASH MPD. Here, the syntax of the above-described second embodiment is used.

In such syntax, in the case of coverage:arbitrary, totalcoverage:arbitrary, it defines that k is 2 or more and from 2 to num_points-1, and 1 is from 0 to num_regions-1.

In addition, if the coverage is not signaled, the coverage shows all 360 degrees. On the other hand, if spatial_set_id of the coverage is signaled and the total coverage is not all 360 degrees, the total coverage having the same spatial_set_id becomes necessary. In addition, Coverage and TotalCoverage may be bundled to one EssentialProperty or SupplementalProperty.

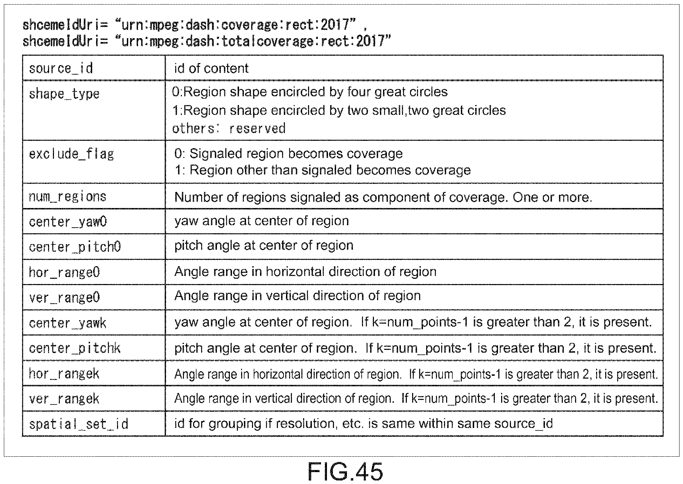

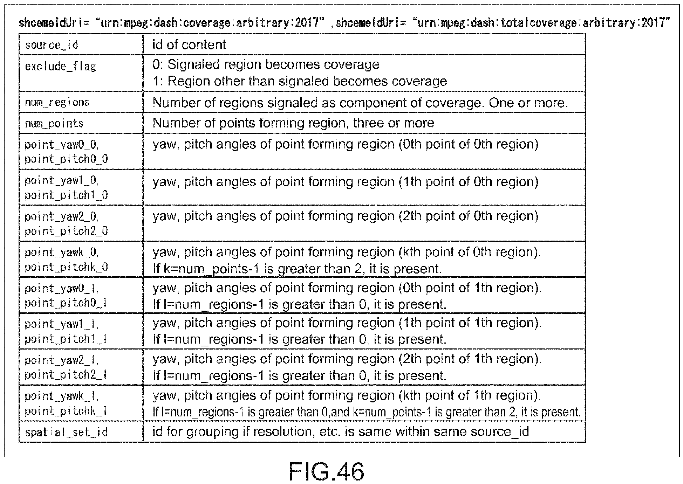

Fig. 45 and Fig. 46 show definitions of parameters used in extended DASH MPD as shown in Fig. 44.

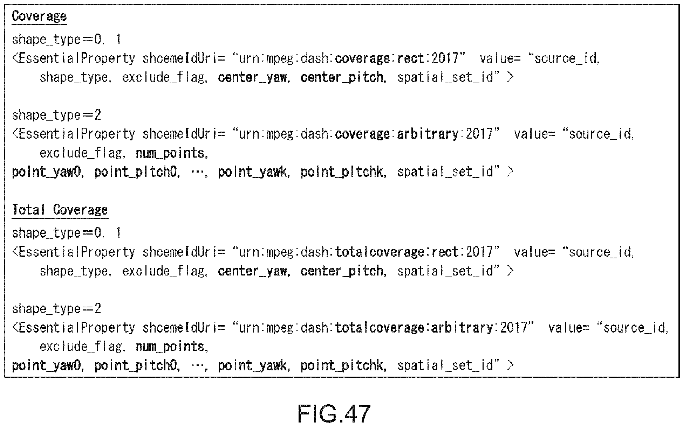

Note that, as a modification when the syntax in the above-described second embodiment is used, EssentialProperty or SupplementalProperty shown in Fig. 47 is signaled for the numbers of regions. Then, a total of the signaled regions becomes Coverage or Total Coverage.

Next, actual signaling examples according to the fourth embodiment will be described.

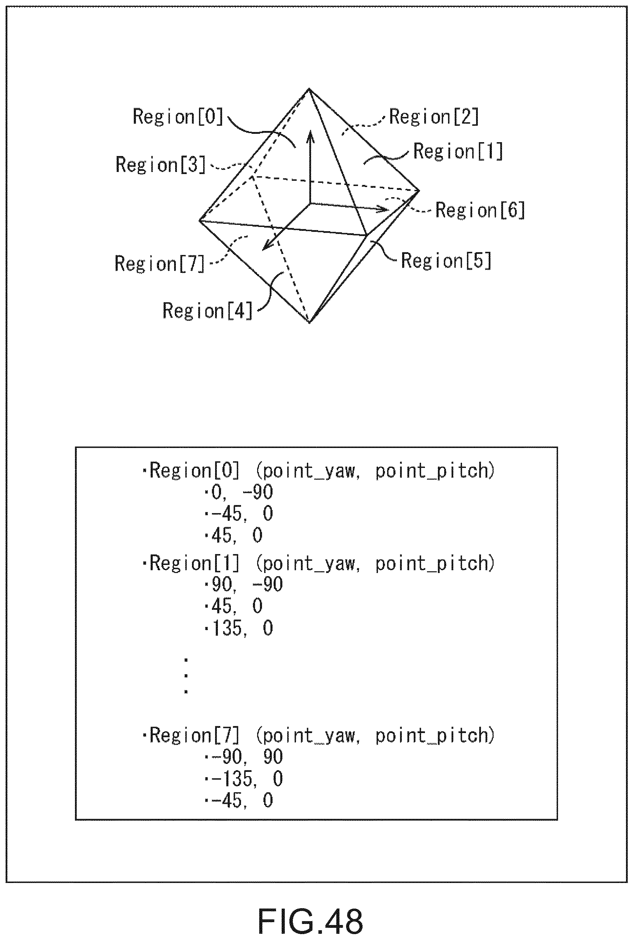

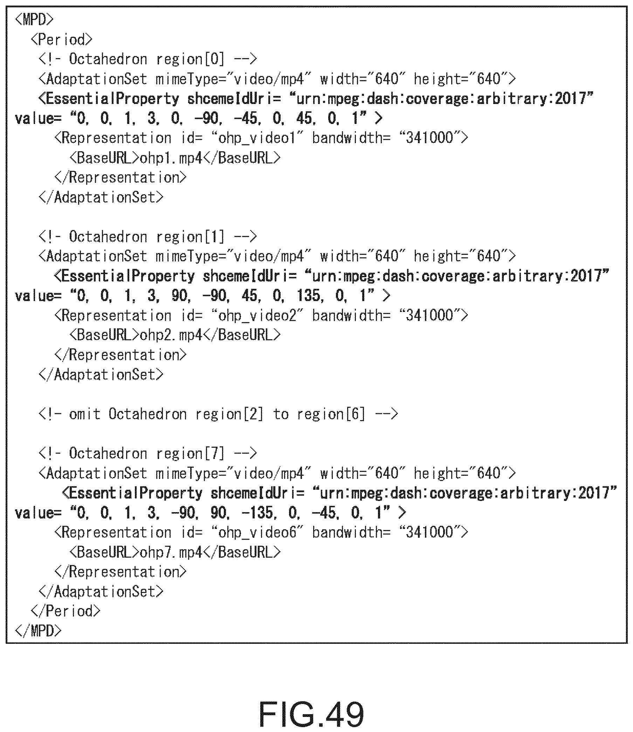

Fig. 48 shows an example that the syntax in the second embodiment is used in the DASH MPD extended as described above. Specifically, as shown at upper side of Fig. 48, eight surfaces of an octahedron are partitioned into regions one by one. In addition, at a lower side of Fig. 48, a signal of point of each region is shown. Fig. 49 shows a description example of the MPD to which the signal is described.

Note that, as a modification of the fourth embodiment, coverage, the total coverage in the case of shape_type=2 may also be expressed by using the same syntax as shape_type=0, 1. In addition, the parameters shown in Fig. 46 are used as parameters.

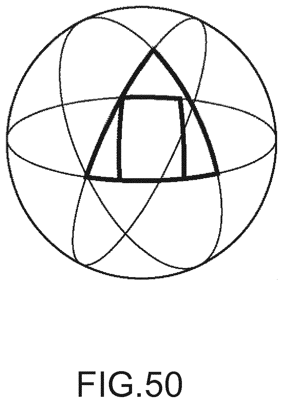

At this time, the region signaled by center_pitch, center_yaw, hor_range, ver_range may not be matched with the coverage of the actual content. Note that it is involved in the actual content coverage, and the maximum region is signaled. For example, as shown in Fig. 50, a substantially rectangular region involved in a substantially triangle actual content coverage that becomes the maximum region is signaled.

### <Configuration example and processing example of system>

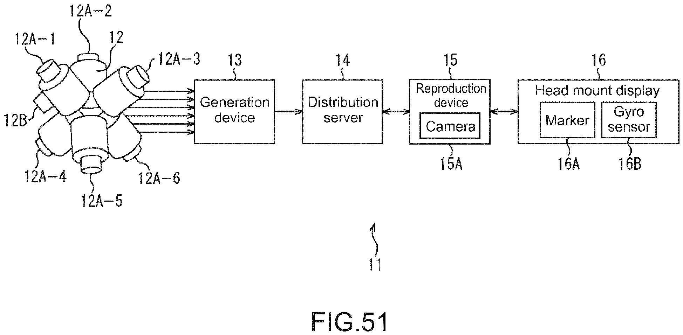

With reference to Fig. 51 to Fig. 55, a system that signals the region on the spherical surface as described above and distributes a full sphere image will be described.

Fig. 51 is a block diagram showing a configuration example of a distribution system to which the present technology is applied.

A distribution system 11 of Fig. 51 includes an imaging device 12, a generation device 13, a distribution server 14, a reproduction device 15, and a head mount display 16. The distribution system 11 generates the full sphere image from an image imaged by the imaging device 12, and displays a display image of a field of view range of audience by using the full sphere image.

Specifically, the imaging device 12 of the distribution system 11 includes six cameras 12A-1 to 12A-6 and a microphone 12B. Note that, if there is no special need to distinguish the cameras 12A-1 to 12A-6 from each other, they are generically referred to as a camera 12A hereinafter.

Each camera 12A images a moving picture, and the microphone 12B acquires surrounding voice. The distribution system 11 feeds the imaged image that is the moving picture imaged in six directions by each camera 12A and the voice acquired from the microphone 12B to the generation device 13 as moving picture content. Note that the number of cameras may be other than six as long as the imaging device 12 includes plural cameras.

The generation device 13 generates the full sphere image from the imaged image fed by the imaging device 12 with the method using the equirectangular projection, encodes it at one or more bit rate, and generates an equirectangular stream at each bit rate. In addition, the generation device 13 generates the full sphere image form the imaged image by cube mapping, encodes it at one or more bit rate, and generates a cube stream at each bit rate. Further, the generation device 13 encodes voice fed from the imaging device 12 and generates an audio stream.

The generation device 13 ISOBMFF-files the equirectangular stream at each bit rate, the cube stream at each bit rate, and the audio stream. The generation device 13 uploads the resultant ISOBMFF file generated to the distribution server 14.

Note that, here, the bit rate of the equirectangular stream and the cube stream is set to one or more, but other conditions (for example, size of image and the like) may be set to one or more.

In addition, the generation device 13 generates an MPD file that manages a segment file of moving image content, and uploads it to the distribution server 14. The segment refers to the video stream and the audio stream filed in a time unit from several seconds to about ten seconds. For example, ISOBMFF including RegionMappingBox is distributed as a segment file.

For example, the distribution server 14 that distributes by using MEPG-DASH (ISO/IEC 23009-1) stores the segment file and the MPD file uploaded from the generation device 13. The distribution server 14 sends the segment file stored to the reproduction device 15 at demand from reproduction device 15 as the client.

The reproduction device 15 demands the distribution server 14 of the ISOBMFF file and receives the ISOBMFF file sent at demand. In addition, the reproduction device 15 demands the segment file of the full sphere image generated by the method of generating the full sphere image corresponding to mapping capable of being performed on the reproduction device 15 on the basis of the ISOBMFF file, and receives the segment file sent at demand. The reproduction device 15 decodes the cube stream (or may be equirectangular stream) included in the received segment file. The reproduction device 15 maps to a 3D model the full sphere image obtained as a result of decoding, and thereby generates a 3D model image.

In addition, the reproduction device 15 incorporates the camera 15A, and images a marker 16A attached to the head mount display 16. Then, the reproduction device 15 detects an audience position in a coordinate system of the 3D model on the basis of the imaged image of the marker 16A. Furthermore, the reproduction device 15 receives a detection result of a gyro sensor 16B of the head mount display 16 from the head mount display 16. The reproduction device 15 determines a gaze direction of the audience in the coordinate system of the 3D model on the basis of the detection result of the gyro sensor 16B. The reproduction device 15 determines the field of view range of the audience positioned inside the 3D model on the basis of the audience position and the gaze direction.

The reproduction device 15 performs perspective projection of a 3D model image on the field of view range of the audience taking the audience position as a focus, and thereby generates the display image of the field of view range of the audience. The reproduction device 15 feeds the display image to the head mount display 16.

The head mount display 16 is mounted to a head of the audience, and displays the display image fed from the reproduction device 15. To the head mount display 16, the marker 16A imaged by the camera 15A is attached. Accordingly, the audience can designate the audience position by moving in the state that the head mount display 16 is mounted to the head. In addition, head mount display 16 incorporates the gyro sensor 16B, and a detection result of an angular velocity by the gyro sensor 16B is transmitted to the reproduction device 15. Accordingly, the audience can designate the gaze direction by rotating the head mounting the head mount display 16.

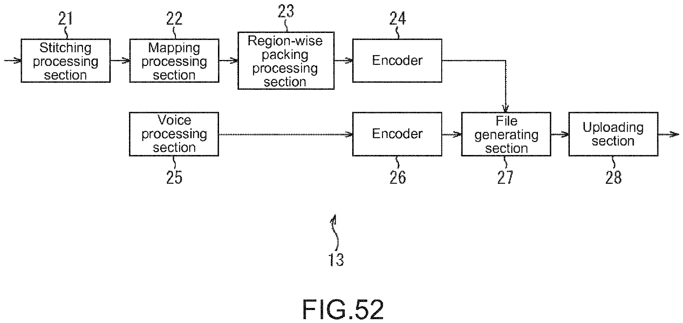

Fig. 52 is a block diagram showing a configuration example of the generation device.

A generation device 13 of Fig. 52 includes a stitching processing section 21, a mapping processing section 22, a region-wise packing processing section 23, an encoder 24, a voice processing section 25, an encoder 26, a file generating section 27, and an uploading section 28.

The stitching processing section 21 performs stitching processing of making a color and brightness the same, removing overlaps, and connecting of the imaged image in the six directions fed from the camera 12A of Fig. 51 for each frame. The stitching processing section 21 feeds the imaged image for each frame after the stitching processing to the mapping processing section 22.

The mapping processing section 22 generates the full sphere image from the imaged image fed from the stitching processing section 21 by the cube mapping in this example. Specifically, the mapping processing section 22 maps the imaged image after the stitching processing to the cube as a texture, and generates the image of a net of the cube as the full sphere image. The mapping processing section 22 feeds the full sphere image to the region-wise packing processing section 23. Note that the stitching processing section 21 and the mapping processing section 22 may be integrated.

The region-wise packing processing section 23 performs region-wise packing processing. Specifically, a position and a size of a projected frame are changed for each region, the projected frame is arranged and packed on a two-dimensional surface, and a packed frame is generated. The region-wise packing processing section 23 also generates RegionMappingBox including margin_flag and region_margin_type.

The encoder 24 encodes the full sphere image fed from the region-wise packing processing section 23 at one or more bit rate, and generates the cube stream. The encoder 24 feeds the cube stream at each bit rate to the file generating section 27.

The voice processing section 25 acquires voice fed from the microphone 12B of Fig. 51 and feeds the voice to the encoder 26. The encoder 26 encodes the voice fed from the voice processing section 25, and generates the audio stream. The encoder 26 feeds the audio stream to the file generating section 27.

The file generating section 27 files the cube stream at each bit rate and the audio stream for a segment unit. The file generating section 27 feeds a resultant segment file generate to the uploading section 28. The file generating section 27 also generates the ISOBMFF file and feeds the ISOBMFF file to the uploading section 28.

At this time, the file generating section 27 can generate extended ISOBMFF described above, and the region information is signaled on the ISOBMFF. In other words, the file generating section 27 generates the region information expressing the region on the spherical surface by signaling the plurality of vertexes on the spherical surface and by connecting the vertexes by the shortest distances on the spherical surface (first embodiment), and writes it to the ISOBMFF. In addition, the file generating section 27 generates the region information expressing the region on the spherical surface by signaling the surface regions in accordance with the number of surfaces, the surface regions being formed by signaling the plurality of vertexes on the spherical surface and by connecting the vertexes by the shortest distances on the spherical surface (second embodiment), and writes it to the ISOBMFF. Alternatively, the file generating section 27 may be configured such that the region information is signaled on the extended MPD when the MPD is generated, similarly (fourth embodiment).

The uploading section 28 uploads the segment film and the ISOBMFF file fed from the file generating section 27 to the distribution server 14 of Fig. 51.

Next, taking image processing is an example, a configuration example of the reproduction device 15 will be described.

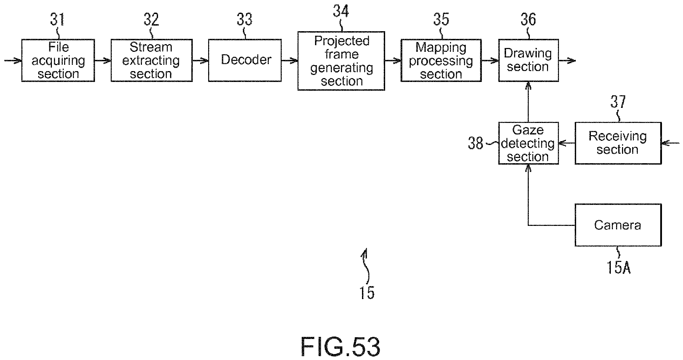

Fig. 53 is a block diagram showing the configuration example of the reproduction device.

The reproduction device 15 of Fig. 53 includes a file acquiring section 31, a stream extracting section 32, a decoder 33, a projected frame generating section 34, a mapping processing section 35, a drawing section 36, a receiving section 37, a gaze detecting section 38, and a camera 15A.

The file acquiring section 31 acquires a file to be reproduced from the distribution server 14 of Fig. 51. The stream extracting section 32 extracts the video stream from the file acquired from the file acquiring section 31. The decoder 33 decodes the video stream extracted from the stream extracting section 32. The projected frame generating section 34 generates the projected frame from image data decoded by the decoder 33.

The mapping processing section 35 maps the full sphere image fed from the projected frame generating section 34 to each of six surfaces of the cube as the texture.

The drawing section 36 performs perspective projection of the 3D model image fed from the mapping processing section 35 on the field of view range of the audience taking the audience position fed from the gaze detecting section 38 as a focus, and thereby generates a display image of the field of view range of the audience. The drawing section 36 feeds the display image to the head mount display 16.

The receiving section 37 receives the detection result of the gyro sensor 16B of Fig. 51 from the head mount display 16, and feeds it to the gaze detecting section 38.

The gaze detecting section 38 determines the gaze direction of the audience in the coordinate system of the 3D model on the basis of the detection result of the gyro sensor 16B fed from the receiving section 37. In addition, the gaze detecting section 38 acquires the imaged image of the marker 16A from the camera 15A, and detects the audience position in the coordinate system of the 3D model on the basis of the imaged image. The detecting section 38 determines the field of view range of the audience in coordinate system of the 3D model. The gaze detecting section 38 feeds the field of view range and the audience position of the audience to the drawing section 36.

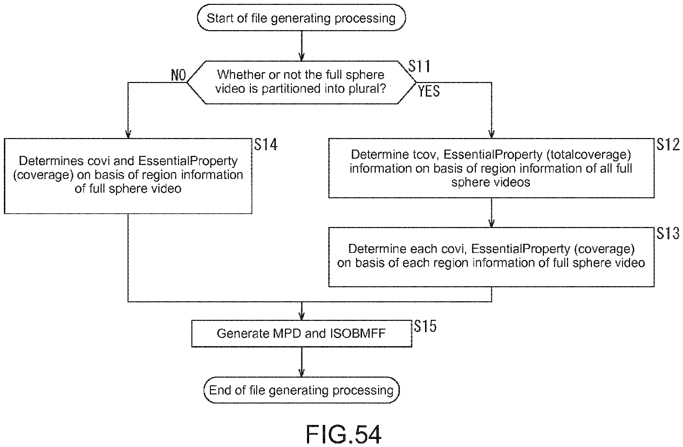

With reference to a flowchart of Fig. 54, file generating processing executed by the file generating section 27 of Fig. 52 will be described.

In Step S11, the file generating section 27 determines whether or not the full sphere video is partitioned into plural.

In Step S11, if it is determined that the full sphere video is partitioned into plural, the processing proceeds to Step S12, and the file generating section 27 determines tcov and EssentialProperty (totalcoverage) information on the basis of the region information of all full sphere videos.

In Step S13, the file generating section 27 determines each of the covi and EssentialProperty (coverage) on the basis of each region information of the full sphere video.

On the other hand, in Step S11, if it is determined that the full sphere video is not partitioned into plural, the processing proceeds to Step S14, the file generating section 27 determines covi and EssentialProperty (coverage) on the basis of the region information of the full sphere video.

After the processing of Step S13 or S14, the processing proceeds to Step S15. After the file generating section 27 generates MPD and ISOBMFF, the processing is ended.

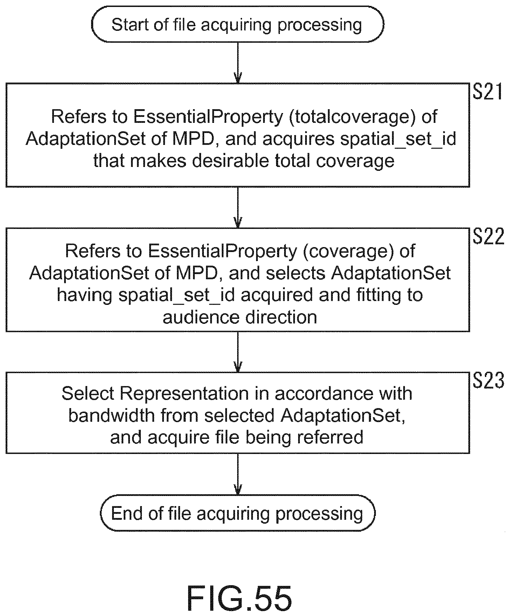

With reference to a flowchart of Fig. 55, file acquiring processing executed by the file acquiring section 31 of Fig. 53 will be described.

In Step S21, the file acquiring section 31 refers to EssentialProperty (totalcoverage) of AdaptationSet of the MPD, and acquires the spatial_set_id that makes the desirable total coverage.

In Step S22, the file acquiring section 31 refers to EssentialProperty (coverage) of AdaptationSet of the MPD, and selects AdaptationSet having spatial_set_id acquired in Step S21 and fitting to the audience direction.

In Step S23, the file acquiring section 31 selects Representation in accordance with a bandwidth from selected AdaptationSet, and acquires the file being referred. The processing is ended.

As described above, the file generating section 27 can generate MPD and ISOBMFF, and the file acquiring section 31 can acquire the file to be generated.

Note that each of processing described with reference to the above-described flowcharts does not always need to process in time series along the order described as the flowchart, and includes parallel or individually executing processing (for example, parallel processing or object processing). In addition, the program may be processed by one CPU or distributed-processed by plural CPUs.

Furthermore, a series of processing described above (information processing method) can be executed by hardware or software. In a case where the series of processing is executed by software, a program of the software is installed from a program recording medium. The program is recorded in a computer built-in dedicated hardware or a general-purpose personal computer that can execute a variety of functions by installing a variety of programs, for example.

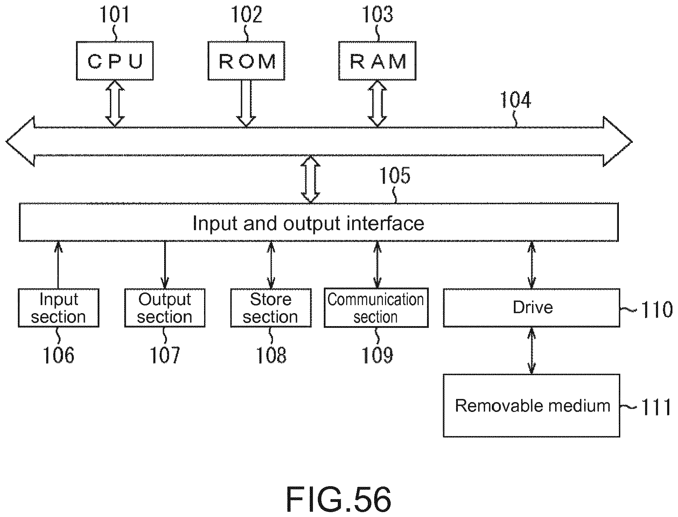

Fig. 56 is a block diagram showing a configuration example of the hardware of the computer that executes the above-described series of processing by the program.

In the computer, a CPU (Central Processing Unit) 101, a ROM (Read Only Memory) 102, and a RAM (Random Access Memory) 103 are interconnected via a bus 104.

To the bus 104, an input and output interfaces 105 are further connected. To the input and output interface 105, an input section 106 including a keyboard, a mouse, a microphone, and the like, an output section 107 including a display, a speaker, and the like, a store section 108, a communication section 109 including a network interface and the like, and a drive 110 of driving a removable medium 111 such as a magnetic disc, an optical disc, a magneto-optical disc, and a semiconductor memory.

In the computer configured as described above, a CPU 101 loads the program stored in the store section 108 to a RAM 103 via the input and output interface 105 and the bus 104 and executes the program, for example, to thereby performing the above-described series of processing.

The program executed by the computer (CPU 101) is supplied by recording the removable medium 111 being a package medium including the magnetic disc (including flexible disc), the optical disc (CD-ROM (Compact Disc-Read Only Memory), DVD (Digital Versatile Disc), or the like), the magneto-optical disc, a semiconductor memory, or the like, or via a wired or wireless transmission medium such as a local area network, the Internet, and digital satellite broadcasting.

Then, the program can be installed to the store section 108 by mounting the removable medium 111 to the drive 110 via the input and output interface 105. In addition, the program can be received at the communication section 109 via the wired or wireless transmission medium and installed to the store section 108. Otherwise, the program can be installed in a ROM 102 or the store section 108 in advance.

### <Combination example of structures>

Note that the present technology may also have the following structures.
(1) An information processing apparatus, including:
   a generating section that generates region information expressing a region on a spherical surface by signaling a plurality of vertexes on the spherical surface and by connecting the vertexes by shortest distances on the spherical surface.
(2) The information processing apparatus according to (1), in which
   a rule for connecting a plurality of the vertexes is introduced into the region information.
(3) The information processing apparatus according to (1) or (2), in which
   in the region information, a representative point included in a region covered by a plurality of the vertexes is signaled.
(4) The information processing apparatus according to any of (1) to (3), in which
   the region information is signaled by an extended ISOBMFF.
(5) The information processing apparatus according to any of (1) to (3), in which
   the region information is signaled by tcov.
(6) The information processing apparatus according to any of (1) to (3), in which
   the region information is signaled by extended DASH MPD.
(7) An information processing method, including the step of:
   generating region information expressing a region on a spherical surface by signaling a plurality of vertexes on the spherical surface and by connecting the vertexes by shortest distances on the spherical surface.
(8) A program causing a computer to execute information processing including the step of:
   generating region information expressing a region on a spherical surface by signaling a plurality of vertexes on the spherical surface and by connecting the vertexes by shortest distances on the spherical surface.
(9) An information processing apparatus, including:
   a generating section that generates region information expressing a region on a spherical surface by signaling surface regions in accordance with a number of surfaces, the surface regions being formed by signaling a plurality of vertexes on the spherical surface and by connecting the vertexes by shortest distances on the spherical surface.
(10) The information processing apparatus according to (9), in which
   a rule for connecting a plurality of the vertexes is introduced into the region information, and in the region information, the surface regions are signaled by repeating a loop in accordance with the number of surfaces.
(11) The information processing apparatus according to (9) or (10), in which
   the region information includes a flag showing that a signaled region is covered or a region other than the signaled region is covered.
(12) The information processing apparatus according to any of (9) to (11), in which
   the region information is signaled by an extended ISOBMFF.
(13) The information processing apparatus according to any of (9) to (11), in which
   the region information is signaled by tcov.
(14) The information processing apparatus according to any of (9) to (11), in which
   the region information is signaled by extended DASH MPD.
(15) An information processing method, including the step of:
   generating region information expressing a region on a spherical surface by signaling surface regions in accordance with the number of surfaces, the surface regions being formed by signaling a plurality of vertexes on the spherical surface and by connecting the vertexes by shortest distances on the spherical surface.
(16) A program causing a computer to execute information processing including the step of:
   generating region information expressing a region on a spherical surface by signaling surface regions in accordance with the number of surfaces, the surface regions being formed by signaling a plurality of vertexes on the spherical surface and by connecting the vertexes by shortest distances on the spherical surface.

Note that the present embodiments are not limited to the above-described embodiments, and variations and modifications may be made without departing from the gist of the present disclosure. Reference Signs List

- 11: distribution system
- 12: imaging device
- 12A: camera
- 12B: microphone
- 13: generation device
- 14: distribution server
- 15: reproduction device
- 15A: camera
- 16: head mount display
- 16A: marker
- 16B: gyro sensor
- 21: stitching processing section
- 22: mapping processing section
- 23: region-wise packing processing section
- 24: encoder
- 25: voice processing section
- 26: encoder
- 27: file generating section
- 28: uploading section
- 31: file acquiring section
- 32: stream extracting section
- 33: decoder
- 34: projected frame generating section
- 35: mapping processing section
- 36: drawing section
- 37: receiving section
- 38: gaze detecting section

## Claims

1. An information processing apparatus, comprising:
a generating section that generates region information expressing a region on a spherical surface by signaling a plurality of vertexes on the spherical surface and by connecting the vertexes by shortest distances on the spherical surface.

2. The information processing apparatus according to claim 1, wherein
a rule for connecting a plurality of the vertexes is introduced into the region information.

3. The information processing apparatus according to claim 1, wherein
in the region information, a representative point included in a region covered by a plurality of the vertexes is signaled.

4. The information processing apparatus according to claim 1, wherein
the region information is signaled by an extended ISOBMFF.

5. The information processing apparatus according to claim 1, wherein
the region information is signaled by tcov.

6. The information processing apparatus according to claim 1, wherein
the region information is signaled by extended DASH MPD.

7. An information processing method, comprising the step of:
generating region information expressing a region on a spherical surface by signaling a plurality of vertexes on the spherical surface and by connecting the vertexes by shortest distances on the spherical surface.

8. A program causing a computer to execute information processing comprising the step of:
generating region information expressing a region on a spherical surface by signaling a plurality of vertexes on the spherical surface and by connecting the vertexes by shortest distances on the spherical surface.

9. An information processing apparatus, comprising:
a generating section that generates region information expressing a region on a spherical surface by signaling surface regions in accordance with a number of surfaces, the surface regions being formed by signaling a plurality of vertexes on the spherical surface and by connecting the vertexes by shortest distances on the spherical surface.

10. The information processing apparatus according to claim 9, wherein
a rule for connecting a plurality of the vertexes is introduced into the region information, and in the region information, the surface regions are signaled by repeating a loop in accordance with the number of surfaces.

11. The information processing apparatus according to claim 9, wherein
the region information includes a flag showing that a signaled region is covered or a region other than the signaled region is covered.

12. The information processing apparatus according to claim 9, wherein
the region information is signaled by an extended ISOBMFF.

13. The information processing apparatus according to claim 9, wherein
the region information is signaled by tcov.

14. The information processing apparatus according to claim 9, wherein
the region information is signaled by extended DASH MPD.

15. An information processing method, comprising the step of:
generating region information expressing a region on a spherical surface by signaling surface regions in accordance with the number of surfaces, the surface regions being formed by signaling a plurality of vertexes on the spherical surface and by connecting the vertexes by shortest distances on the spherical surface.

16. A program causing a computer to execute information processing comprising the step of:
generating region information expressing a region on a spherical surface by signaling surface regions in accordance with the number of surfaces, the surface regions being formed by signaling a plurality of vertexes on the spherical surface and by connecting the vertexes by shortest distances on the spherical surface.
